# EUROPEAN PATENT SPECIFICATION

(11) **EP 3 568 438 B1**
(45) Date of publication and mention of the grant of the patent: **28.02.2024**
(21) Application number: 18700173.0
(22) Date of filing: 11.01.2018
(51) Int. Cl.: C08L 33/12

(54) **POLYMER COMPOSITION WITH FILLER, ITS METHOD OF PREPARATION AND USE**
POLYMERZUSAMMENSETZUNG MIT FÜLLSTOFF, VERFAHREN ZUR HERSTELLUNG UND VERWENDUNG DAVON
COMPOSITION POLYMÈRE AVEC CHARGE, SON PROCÉDÉ DE PRÉPARATION ET SON UTILISATION

(30) Priority: 11.01.2017 FR 1750246
(43) Date of publication of application: 20.11.2019
(73) Proprietor: Arkema France, 92700 Colombes (FR)
(72) Inventor: VERMOGEN, Alexandre, 69510 Soucieu-en-Jarrest (FR); PIRRI, Rosangela, 64121 Montardon (FR); HAJJI, Philippe, 69260 Charbonnières-les-Bains (FR)
(74) Representative: Arkema Patent
(86) International application number: PCT/EP2018/050682
(87) International publication number: WO 2018/130620

(56) References cited:
- CN-A- 103 642 161
- CN-A- 104 262 845
- US-A- 3 996 173
- US-A1- 2008 207 831
- US-A1- 2012 189 837
- US-A1- 2015 284 553

## Description

### [Field of the invention]

The present invention according to the appended claims 1 to 23 relates to a composition comprising a combination of a polymeric processing aid and an impact modifier or polymeric processing aid, its exact composition and its process of preparation and its use.

In particular the present invention according to the appended claims relates to a composition comprising a combination of a polymeric processing aid and an impact modifier or a polymeric processing aid; and its use for filled impact modified halogen containing thermoplastic polymers.

More particularly the present invention according to the appended claims relates to a filled halogenated containing polymer composition with a polymeric processing aid and an impact modifier, its composition and its process of preparation.

### [Technical problem]

Fillers are used in thermoplastic polymer compositions in general and in halogenated polymer compositions in particularly for a variety of reasons. They can extend the composition, increase stiffness and strength, and shorten cycle times. They prevent hang-up in dies and neutralize the products of degradation. Fillers cans also be used to add color, opacity and conductivity or they can be used as a low cost material that lowers the cost of the composition as the filler is less expensive the other ingredients of the formulation.

However the addition of filler can change the fusion characteristics of the polymer composition. Proper fusion is necessary to obtain good physical properties.

Polymer compositions comprising polymers with specific characteristic (such as polymer composition, glass transition temperature or specific molecular weight range for naming some characteristics) are used as additives for thermoplastic polymer compositions in general and in halogenated polymer compositions in particularly in order to enhance the processing behavior of these various polymers or plastic resin or to improve their performance. Therefor these additives are also called processing aids.

The additive polymer composition is compatible with thermoplastic polymer compositions in general and in halogenated polymer compositions in particularly.

Processing aids in small quantities in thermoplastic polymer compositions in general and in halogenated polymer compositions in particularly can improve the processing characteristics through an acceleration of the fusion process of said thermoplastic polymer compositions in general and of halogenated polymer compositions in particularly.

With a filler added to the composition, the processing aid used for the non-filled composition does not possess the same performance as in a filled composition, especially in view of fusion efficiency of the composition, but also in view of impact strength.

The objective of the present invention is to propose a polymer composition which acts as processing aid and impact modifier for filled halogenated polymer compositions.

The objective of the present invention is as well to propose a polymer composition which acts as processing aid and impact modifier for filled halogenated polymer compositions independently of the ratio of the filler in the final composition.

An objective of the present invention is also to have a polymer composition that can be used to optimize the melt behaviour especially the speed of fusion of filled impact modified halogenated polymer compositions.

Another objective of the present invention is to avoid the change of the polymer composition acting as processing aid depending on the ratio of the filler in the filled impact modified halogenated polymer compositions.

An additional objective of the present invention is the reduction of the price of a polymer composition which acts as processing aid for filled impact modified halogenated polymer compositions by addition of low cost components without influencing the fusion efficiency.

Still another objective of the present invention is a method for manufacturing a polymer composition which act as processing aid or as processing aid and impact modifier for filled impact modified halogenated polymer compositions.

Still an additional objective is having a process for preparing a polymer composition that can be used to increase the melt behaviour of filled impact modified halogenated polymer compositions.

Still a further objective is to obtain a filled impact modified halogenated polymer composition that is easily processable independently of the ratio of the filler and has the same (meth) acrylic processing aid.

A still further objective of the present invention is also to have a polymer composition that can be used to optimize the melt behaviour especially the speed of fusion of filled halogenated polymer compositions and does not influence in an important way the impact performance, latter meaning increasing, keeping the same level or a decrease of less than 50%.

### [BACKGROUND OF THE INVENTION ]Prior art

The document US 2009/0111915 discloses acrylic copolymers for use in highly filled compositions. In particular the document disclosed filled polyvinylchloride (PVC) materials as a composition for flooring comprising 70wt% to 95wt% filler, 1wt% to 15wt%PVC and 0.5wt% to 4wt% of acrylic copolymer or a composition for siding or pipe comprising 15wt% to 35wt% filler, 50wt% to 95wt%PVC and 0.25 to 6wt% of acrylic copolymer.

The document WO 2010/099160 discloses composite polymer modifiers. The document discloses a composite polymer modifier consisting of 99wt% to 1wt% of inorganic filler and from 1wt% to 99wt% of a polymeric processing aid and 0wt% to 80% of an impact modifier.

The document US 3,373,229 discloses vinyl polymer compositions. The compositions comprises polyvinyl chloride and high molecular weight polymers of methyl methacrylate or copolymers of methyl meth acrylate with a small amount of an alkyl acrylate as processing aid. The composition might comprise a filler.

The document US 4,329,276 discloses molding components. The molding component is based on polyvinyl chloride comprising a component composition. The component composition and comprises between 40-85wt% of an acrylic polymer preferably having a Tg between 70°C and 90°C, and comprising preferably methyl methacrylate and butyl methacrylate in a proportion 50/50 to 85/15.

The document US2012/189837 discloses an acrylic process aid for vinyl foam extrusion. The acrylic process aid is an acrylic copolymer preferably having a Tg less than 60°C. In the examples a copolymer of methyl methacrylate (70%) with butyl acrylate (30%) is disclosed. The acrylic copolymer used does not comprise a filler.

The document CN104262845 discloses a PVC/PMMA alloy material. The alloy comprises the following components in parts by weight: 37-62 parts of PVC resin, 25-38 parts of PMMA resin, 3.0-4.0 parts of stabilizer, 4.0-8.0 parts of impact-resistant modifier, 0.5-1.0 part of processing aids, 0.5-1.0 part of weather-resistant agent, 3.0-5.0 parts of inorganic filler and 2.0-6.0 parts of pigment. The processing aid is an oxidized polyethylene wax.

The document CN103642161 discloses a high impact polyvinylchloride pipe material. The high impact chlorinated polyvinyl chloride pipe material is prepared from the following raw materials in parts by weight: 40-60 parts of chlorinated polyvinyl chloride (CPVC) resin, 30-50 parts of polyvinyl chloride (PVC) resin, 0.3-0.6 part of polyethylene wax, 20-30 parts of active light calcium, 2-3 parts of dimethyl dimercaptoacetate isooctyl tin, 1-2 parts of barium stearate, 1-2 parts of ACR-401, 8-10 parts of HIPS, 2-3 parts of HIPS-g-PMMA, 4-7 parts of impact modifier ACM resin and 5-10 parts of a composite filler.

Further documents related to polymer modifiers and/or impact resistant PVC compositions are US 2015/284553 A, US 3 996 173 A and US 2008/207831 A.

None of the prior art documents discloses a filled polymer composition comprising a halogen containing impact modified thermoplastic polymer and a (meth)acrylic copolymer with a filler and optionally with an impact modifier where a part of the filler is added to the composition with the (meth)acrylic copolymer and a part of the filler is added to the composition with the halogen containing thermoplastic polymer.

### [Brief description of the invention]

Surprisingly it has been found that a composition according to appended claims 1 to 5, gives a composition with a short fusion time and satisfying impact properties.

Surprisingly it has also been found that a process according to appended claims 6 to 14, gives a composition with a short fusion time and satisfying impact properties.

Surprisingly it has also been found that compositions according to appended claims 16 to 20 can be used to decrease the fusion time of composition comprising a halogen containing polymer and a filler

### [Detailed description of the invention]

The present invention is illustrated by the appended claims 1 to 23.

By the term "copolymer" as used is denoted that the polymer consists of at least two different monomers.

By the term " (meth) acrylic" as used is denoted all kind of acrylic and methacrylic monomers.

By the term " (meth) acrylic polymer" as used is denoted that the (meth)acrylic) polymer comprises essentially polymers comprising (meth) acrylic monomers that make up 50wt% or more of the (meth)acrylic polymer.

By the term "impact modifier" is denoted a material that once incorporated in a polymeric material increases the impact resistance and toughness of that polymeric material by phase micro domains of a rubbery material or rubber polymer.

By the term "rubber" as used is denoted to the thermodynamic state of the polymer above its glass transition.

By the term "rubber polymer" as used is denoted a polymer that has a glass transition temperature (Tg) below 0°C.

By "multistage polymer" as used is denoted a polymer formed in sequential fashion by a multi-stage polymerization process. Preferred is a multi-stage emulsion polymerization process in which the first polymer is a first-stage polymer and the second polymer is a second-stage polymer, i.e., the second polymer is formed by emulsion polymerization in the presence of the first emulsion polymer.

By the term "dispersion" as used is denoted a colloidal system with a continuous liquid phase and a discontinuous solid phase that is distributed throughout the continuous phase.

By the term "emulsion" as used is denoted a liquid/liquid mixture of a liquid discontinuous phase in a liquid continuous phase.

By the term "PVC" as used is understood polyvinyl chloride in form of homopolymer or copolymer comprising at least 50wt% of vinyl chloride.

By the term "filler" as used is understood a solid extender added to a polymer in order to enhance properties and/or reduce costs.

By the abbreviation "phr" is meant parts per hundred parts of resin. For example 15phr of filler in a PVC formulation means that 15kg of filler are added to 100kg of PVC.

**With regard to the composition** of the present invention, it comprises between 5phr and 120phr and most advantageously between 5phr and 100phr of filler (F) or a mixture of two fillers (F1) and (F2) relative to the halogen containing thermoplastic polymer.

The polymer composition or composition according to the invention, it comprises between 0.01phr and 20phr, preferably between 0.05 and 17phr, more preferably between 0.1phr and 15phr, advantageously between 0.15phr and 12phr and more advantageously between 0.15phr and 10phr of the (meth)acrylic copolymer (A1) or the mixture of two (meth)acrylic copolymers (A1a) and (A1b) relative to the halogen containing thermoplastic polymer.

The polymer composition or composition according to the invention, it comprises between 0.15phr and 12phr and more advantageously between 0.15phr and 10phr an impact modifier (IM1).

In a first most advantageously embodiment the composition according to the invention it comprises between 0.15phr and 9phr of the (meth)acrylic copolymer (A1) or the mixture of two (meth)acrylic copolymers (A1a) and (A1b) relative to the halogen containing thermoplastic polymer.

In a second most advantageously embodiment the composition according to the invention it comprises between 0.15phr and 4phr of the (meth)acrylic copolymer (A1) or the mixture of two (meth)acrylic copolymers (A1a) and (A1b) relative to the halogen containing thermoplastic polymer.

Advantageously the composition comprises more impact modifier (IM1) as the (meth) acrylic copolymer (A1) or the mixture of two (meth)acrylic copolymers (A1a) and (A1b), relative to the halogen containing thermoplastic polymer.

According to the invention a part of the filler (F) or a part of the mixture of two fillers (F1) and (F2) is added to the composition with the meth) acrylic copolymer (A1) or the mixture of two (meth) acrylic copolymers (A1a) and (A1b). The other part of the filler (F) or the other part of the mixture of two fillers (F1) and (F2) is added to the composition either apart or already with halogen containing thermoplastic polymer. By "already with halogen containing thermoplastic polymer" is meant that the said other part of the filler (F) or a part of the mixture of two fillers (F1) and (F2)is added the halogen containing thermoplastic polymer before the (meth)acrylic copolymer (A1) or the mixture of two (meth)acrylic copolymers (A1a) and (A1b), both comprising already a part of the filler (F) or a part of the mixture of two fillers (F1) and (F2) is added.

According to a variation of the invention a part of the filler (F) or a mixture of two fillers (F1) and (F2) is added to the composition with the (meth)acrylic copolymer (A1) or the mixture of two (meth)acrylic copolymers (A1a) and (A1b) and another part of the filler (F) or a mixture of two fillers (F1) and (F2) is added to the composition with halogen containing thermoplastic polymer.

Preferably the part of the filler (F) or a mixture of two fillers (F1) and (F2) which is added to the composition apart or which is already with the halogen containing thermoplastic polymer, exceeds in quantity the part of the filler (F) or a mixture of two fillers (F1) and (F2) that is added to the composition with the (meth)acrylic copolymer (A1) or the mixture of two (meth)acrylic copolymers (A1a) and (A1b).

According to the invention the impact modifier (IM1) can be added as a single compound when preparing the composition of the invention or added with a composition P1a that comprises the impact modifier (IM1).

**With regard to the (meth)acrylic copolymer (A1)** or the two (meth)acrylic copolymers (A1a) and (A1b), it is a (meth) acrylic copolymer comprising at least 50wt% of polymeric units coming from methyl methacrylate.

More preferably the polymer (A1) comprises a comonomer or comonomers which are copolymerizable with methyl methacrylate, as long as polymer (A1) is having a glass transition temperature between 60 °C and 105°C.

More preferably the two (meth)acrylic copolymers (A1a) and (A1b) comprises a comonomer or comonomers which are copolymerizable with methyl methacrylate, as long as the mixture of two (meth)acrylic copolymers (A1a) and (A1b) is having a average glass transition temperature between 60°C and 105°C.

The comonomer or comonomers in copolymers (A1), (A1a) and (A1b) are preferably chosen from (meth)acrylic and/or vinyl monomers.

The (meth)acrylic comonomer in (meth)acrylic copolymer (A1), (A1a) and (A1b) comprises monomers chosen from C1 to C12 alkyl (meth)acrylates. The vinyl comonomer comprises monomers chosen from styrene and substituted styrene. Still more preferably (meth)acrylic comonomer in polymer (A1) comprises monomers of C1 to C4 alkyl methacrylate and/or C1 to C8 alkyl acrylate monomers.

Most preferably the acrylic or methacrylic comonomers of the (meth)acrylic copolymer (A1) or the two (meth)acrylic copolymers (A1a) and (A1b) are chosen from methyl acrylate, propyl acrylate, isopropyl acrylate, butyl acrylate, tert-butyl acrylate, methyl methacrylate, ethyl methacrylate, butyl methacrylate and mixtures thereof, as long as meth)acrylic copolymer (A1) or the mixture of two (meth)acrylic copolymers (A1a) and (A1b) is having a glass transition temperature between 60°C and 105°C.

Preferably the (meth)acrylic copolymer (A1) comprises at most 90wt%, more preferably at most 85wt% and advantageously at most 81wt% of polymeric units coming from methyl methacrylate.

In a specific embodiment the (meth)acrylic copolymer (A1) is a copolymer of methyl methacrylate with ethyl acrylate and/or butyl acrylate.

More preferably the glass transition temperature Tg of the (meth)acrylic polymer (A1) or the average glass transition temperature Tg of the mixture of two (meth)acrylic copolymers (A1a) and (A1b) comprising at least 50wt% of polymeric units coming from methyl methacrylate is between 60°C and 105°C, even more preferably between 65°C and 100°C and advantageously between 70°C and 100°C.

The glass transition temperature Tg can be estimated for example by dynamic methods as thermo mechanical analysis (DMA).

Preferably the mass average molecular weight Mw of the (meth)acrylic copolymer (A1) or the two (meth)acrylic copolymers (A1a) and (A1b) comprising at least 50wt% of polymeric units coming from methyl methacrylate is at least 300 OOOg/mol, preferably at least 500 OOOg/mol, more preferably at least 750 000g/mol, advantageously at least 1 000 000 g/mol and most advantageously at least 1 500 000g/mol.

Preferably the mass average molecular weight Mw of the (meth)acrylic copolymer (A1) or the two (meth)acrylic copolymers (A1a) and (A1b) comprising at least 50wt% of polymeric units coming from methyl methacrylate is less than 20 000 000g/mol, preferably less than 15 000 000g/mol, more preferably less than 12 000 000g/mol, advantageously less than 10 000 000 g/mol and most advantageously less than 9 000 000g/mol.

More preferably the mass average molecular weight Mw of the (meth)acrylic copolymer (A1) or the two (meth)acrylic copolymers (A1a) and (A1b) comprising at least 50wt% of polymeric units coming from methyl methacrylate is between 300 000g/mol and 20 000 000g/mol, still more preferably between 500 000g/mol and 15 000 000g/mol, even more preferably between 1 000 000 g/mol and 12 000 000g/mol and advantageously between 1 500 000g/mol and 10 000 000 g/mol.

The (meth)acrylic copolymer (A1) or the two (meth)acrylic copolymers (A1a) and (A1b) comprising at least 50wt% of polymeric units coming from methyl methacrylate is preferably prepared by an emulsion polymerisation, yielding to an aqueous dispersion of spherical polymer particles of the (meth)acrylic copolymer (A1) or the two (meth)acrylic copolymers (A1a) and (A1b).

A possible variation of the method for preparing an aqueous dispersion of spherical polymer particles comprising the (meth)acrylic copolymer (A1) or the mixture of two (meth)acrylic copolymers (A1a) and (A1b) is by using a multistage process.

During one stage of the multistage process the (meth)acrylic copolymer (A1) is prepared.

The mixture of two (meth)acrylic copolymers (A1a) and (A1b) can also be prepared by a multistage process. During one stage of the multistage process the (meth)acrylic copolymer (A1a) is prepared and during another stage the (meth)acrylic copolymer (A1b).

With regard to the spherical polymer particle, it has a weight average particle size between 20nm and 500nm. Preferably the weight average particle size of the polymer is between 50nm and 400nm, more preferably between 75nm and 350nm and advantageously between 80nm and 300nm.

**With regard to the filler (F), (F1) and/or (F2),** it is an inorganic filler or mineral filler.

**With regard to the mineral filler,** mention may be made of glass fibers, hollow glass microspheres, inorganic compounds, such as minerals and salts including calcium carbonate (CaCO₃), silica, silicates such as calcium silicate or metasilicate, clay such as bentonite, mica, talc, alumina trihydrate, magnesium hydroxide, metal oxides, or combinations of two or more thereof.

Preferably the mineral filler is chosen from calcium carbonate, titanium dioxide or calcinated clay, silica (fumed or precipitated), clay, Montmorillonite (nano-clay), zeolite, perlite or any other type of inorganic material that can be obtained as a slurry.

More preferably a part of the filler (F) or the mixture of two fillers (F1) and (F2) is a mineral filler chosen from calcium carbonate, calcinated clay, silica (fumed or precipitated), clay, Montmorillonite (nano-clay), zeolite or perlite.

Still more preferably the mineral filler is chosen from calcium carbonate, calcinated clay, silica (fumed or precipitated), clay, Montmorillonite (nano-clay), zeolite or perlite.

In a still even more preferred embodiment the mineral filler is calcium carbonate (CaCO3).

Advantageously the calcium carbonate is chosen from precipitated calcium carbonate (PCC), grinded natural calcium carbonate (GCC) or nanosized particles of precipitated calcium carbonate (NPCC).

The mineral filler could also be in form of a slurry.

Preferably the filler (F) or (F2) that is mixed with at least one (meth)acrylic copolymer (A1) or a mixture of two (meth)acrylic copolymers (A1a) and (A1b) is in form of a slurry.

**As regards the slurry of the mineral filler,** it is a water dispersion of a mineral filler with solid content preferably between 5wt% and 90wt% and advantageously between 50wt% and 80wt%. This water dispersion can contain any specific surfactant, dispersing agent, additive or filler surface treatment that can advantageously improve the quality of the slurry (stability, viscosity or compatibility with the host polymer matrix).

**With regard to the impact modifier (IM1),** it is a polymeric impact modifier, which is a polymer particle having a multilayer structure. Such an impact modifier (IM1) is more preferable a core/shell polymer.

The polymer particle having a multilayer structure is more or less spherical shape. The polymer particle has a weight average particle size (diameter) between 20nm and 500nm. Preferably the weight average particle size of the polymer particle is between 50nm and 400nm, more preferably between 75nm and 350nm and advantageously between 80nm and 300nm.

The polymer particle according to the invention is obtained by a multistage process such as two or three stages or more stages, each stage yield to a layer, the whole process yields to a particle with a multilayer structure. The first stage or the first stages give the core, the following stage or all following stages give the shell or shells.

The polymeric impact modifier (IM1) in form of the polymeric particle having a multilayer structure comprising at least one layer (IM1L1) comprising a polymer (L1) having a glass transition temperature below 0°C and at least another layer (IM1L2) comprising a polymer (L2) having a glass transition temperature over 45°C.

More preferably the glass transition temperature Tg of the polymer (L1) is between -100°C and 0°C, even more preferably between -80°C and 0°C and advantageously between -80°C and -20°C and more advantageously between -70°C and -20°C.

Preferably the glass transition temperature Tg of the polymer (L2) is between 60°C and 150°C. The glass transition temperature of the polymer (L2) is more preferably between 80°C and 140°C, advantageously between 90°C and 135°C and more advantageously between 90°C and 130°C.

In order to obtain a sample of the respective polymers (L1) and (L2) they can be prepared alone, and not by a multistage process, for estimating and measuring more easily the glass transition temperature Tg individually of the respective polymers of the respective stages.

The weight ratio of layer (IM1L1)/layer (IM1L2) in the multistage polymer is preferably at least 70/30, more preferably at least 80/20, even more preferably at least 85/15, advantageously at least 86/14, more advantageously 87/13, even more advantageously 88/12 and most advantageously 89/11.

The weight ratio of layer (IM1L1)/layer (IM1L2) in the multistage polymer is preferably in a range by weight between 70/30 and 99/1, more preferably 80/20 and 98/2, even more preferably 85/15 and 97/3, advantageously 86/14 and 97/3, more advantageously 87/13 and 97/3, even more advantageously 88/12 and 97/3 and most advantageously 89/11 to 96/4.

Preferably the polymer L1 presents more than 85wt% of the polymeric impact modifier (IM1) and more preferably more than 86wt% and advantageously more than 87wt%.

The multi-layer structure of IM1 can have different structures. The layer (IM1L1) comprising a polymer (L1) having a glass transition temperature below 0°C, can be the core of the polymeric impact modifier (IM1) or an intermediate layer, but never the most outer layer. The layer (IM1L2) comprising a polymer (L2) having a glass transition temperature over 45°C can be the most outermost layer.

The layer (IM1L2) comprising a polymer (L2) is preferably a (meth) acrylic copolymer comprising at least 50wt% of polymeric units coming from methyl methacrylate. Preferably the polymer (L2) or the majority of the polymer (L2) of the layer (IM1L2) is grafted on the layer situated below.

In a first preferred embodiment of (IM1), the polymer (L1) having a glass transition temperature below 0°C is a (meth) acrylic polymer comprising at least 50wt% of monomers from alkyl acrylates.

More preferably the polymer (L1) comprises a comonomer or comonomers which are copolymerizable with alkyl acrylate, as long as polymer (A1) is having a glass transition temperature of less than 0°C.

The comonomer or comonomers in polymer (L1) are preferably chosen from (meth)acrylic monomers and/or vinyl monomers.

The (meth)acrylic comonomer in polymer (L1) comprises monomers chosen from C1 to C12 alkyl (meth)acrylates. Still more preferably (meth)acrylic comonomer in polymer (L1) comprises monomers of C1 to C4 alkyl methacrylate and/or C1 to C8 alkyl acrylate monomers.

Most preferably the acrylic or methacrylic comonomers of the polymer (L1) are chosen from methyl acrylate, propyl acrylate, isopropyl acrylate, butyl acrylate, tert-butyl acrylate, methyl methacrylate, ethyl methacrylate, butyl methacrylate and mixtures thereof, as long as polymer (L1) is having a glass transition temperature of less than 0°C.

Preferably the polymer (A1) is crosslinked. This means that a crosslinker is added to the other monomer or monomers. A crosslinker comprises at least two groups that can be polymerized.

In one specific embodiment polymer (L1) is a homopolymer of butyl acrylate.

In another specific embodiment polymer (L1) is a copolymer of butyl acrylate and at least one crosslinker. The crosslinker presents less than 5wt% of this copolymer.

More preferably the glass transition temperature Tg of the polymer (L1) of the first embodiment is between -100°C and 0°C, even more preferably between -100°C and -5°C, advantageously between -90°C and -15°C and more advantageously between -90°C and -25°C.

In a second preferred embodiment the polymer (L1) having a glass transition temperature below 0°C comprises at least 50wt% of polymeric units coming from isoprene or butadiene and the stage or layer (IML1) is the most inner layer of the polymer particle having the multilayer structure. In other words the stage for making the layer (IM1L1) comprising a polymer (L1) is the core of the polymer particle.

By way of example, the polymer (L1) of the core of the second embodiment, mention may be made of isoprene homopolymers or butadiene homopolymers, isoprene-butadiene copolymers, copolymers of isoprene with at most 98 wt% of a vinyl monomer and copolymers of butadiene with at most 98 wt% of a vinyl monomer. The vinyl monomer may be styrene, an alkylstyrene, acrylonitrile, an alkyl (meth)acrylate, or butadiene or isoprene. In one embodiment the core is a butadiene homopolymer.

More preferably the glass transition temperature Tg of the polymer (L1) of the second embodiment comprising at least 50wt% of polymeric units coming from isoprene or butadiene is between - 100°C and 0°C, even more preferably between -100°C and -5°C, advantageously between -90°C and -15°C and even more advantageously between -90°C and -25°C.

In a variation the impact modifier (IM1) could also comprise a filler (F) or (F1)as defined before.

**With regard to the halogen containing polymer,** mention may be made of:
- homopolymers and copolymers of vinyl chloride (PVC) and of vinylidene chloride (PVDC), vinyl resins comprising vinyl chloride units in their structure, such as copolymers of vinyl chloride, and vinyl esters of aliphatic acids, especially vinyl acetate, copolymers of vinyl chloride with esters of acrylic and methacrylic acid and with acrylonitrile, copolymers of vinyl chloride with diene compounds and unsaturated dicarboxylic acids or their anhydrides, such as copolymers of vinyl chloride with diethyl maleate, diethyl fumarate or maleic anhydride, post-chlorinated polymers and copolymers of vinyl chloride, copolymers of vinyl chloride and vinylidene chloride with unsaturated aldehydes, ketones and others, such as acrolein, crotonaldehyde, vinyl methyl ketone, vinyl methyl ether, vinyl isobutyl ether and the like; polymers of vinylidene chloride and its copolymers with vinyl chloride and other polymerizable compounds;
- polymers of vinyl chloroacetate and dichlorodivinyl ether; chlorinated polymers of vinyl carboxylate, such as vinyl acetate, vinyl propionate, vinyl butyrate, chlorinated polymeric esters of acrylic acid and of α-substituted acrylic acid, such as methacrylic acid, of nitriles, amides, alkyl esters such as acrylonitrile, (meth)acrylamide, methyl (meth)acrylate, butyl acrylate, ethyl acrylate, 2-ethylhexyl acrylate;
- polymers of vinyl aromatic derivatives, such as styrene, dichlorostyrene; chlorinated rubbers;
- chlorinated polymers of olefins, such as ethylene, propene, 1-butene, (2.2.1)bicyclo heptene-2, (2.2.1)bicyclo hepta-diene-2,5;
- polymers and post-chlorinated polymers of chlorobutadiene and copolymers thereof with vinyl chloride, chlorinated natural and synthetic rubbers, and also mixtures of these polymers with one another or with other polymerizable compounds.
- grafted halogen containing copolymers, where the halogen containing polymer part is grafted on an (meth)acrylic homo or copolymer, in form of a particles, which could be crosslinked or not.

Preferably the halogen containing polymer is a thermoplastic polymer and not an elastomeric polymer. The glass transition temperature (measured by differential scanning calorimetry) of the thermoplastic polymer is at least 40°C, preferably 50°C.

Preferably the halogen in the halogen containing polymer is chosen from fluorine or chlorine and advantageously the halogen is chlorine.

The chlorine containing polymer is chosen from among polymers or mixtures of polymers chosen from among homopolymer vinyl chlorides such as polyvinyl chloride, polyvinylidene chloride, chlorinated polyvinyl chloride, post-chlorinated polyvinyl chloride and copolymers formed by the polymerisation of a vinyl chloride monomer with up to 40% of a comonomer such as vinyl acetate, vinyl butyrate, vinylidene chloride, propylene, methyl methacrylate and the like, as well as chlorine-containing polymers containing other polymers such as chlorinated polyethylene, terpolymers of acrylonitrile, butadiene, styrene, terpolymers of methyl methacrylate, butadiene, styrene; polyacrylate resins, poly methyl methacrylate resins and terpolymer of alkyl acrylate, methyl methacrylate, butadiene, preferably the chlorine-containing polymer is polyvinyl chloride or post-chlorinated polyvinyl chloride.

Preferably the chlorine containing polymer is chosen from homo- and copolymers of vinyl chloride (VC); comprising at least 50wt% of VC units, preferably at least 70 wt% of VC units, more preferably at least 80 wt% of VC units, advantageously at least 85 wt% of VC units; or mixtures thereof.

**With regard to the manufacturing method for** a polymer composition according to the present invention, it comprises the step of
blending a composition P1a with a halogen containing polymer and a filler (F) or (F2)
characterized that the composition P1a comprises an (meth)acrylic copolymer (A1) and the impact modifier (IM1) or a mixture of two (meth)acrylic copolymers (A1a) and (A1b) and the impact modifier (IM1); and a filler (F) or (F1) and wherein the glass transition temperature Tg of the (meth)acrylic copolymer is less than 105°C and that the quantity of the filler (F) or (F1) and (F2) together is between 1phr and 250phr in view of the halogen containing thermoplastic polymer.

**With regard to a variation of manufacturing method for** a polymer composition according to the present invention, it comprises the step of
blending a composition P1b with a halogen containing polymer, the impact modifier (IM1) and a filler (F) or (F2)
characterized that the composition P1b comprises an (meth)acrylic copolymer (A1) or a mixture of two (meth)acrylic copolymers (A1a) and (A1b) and the impact modifier (IM1); and a filler (F) or (F1) and
wherein the glass transition temperature Tg of the (meth) acrylic copolymer is less than 105°C and that the quantity of the filler (F) or (F1) and (F2) together is between 1phr and 250phr in view of the halogen containing thermoplastic polymer.

The filler (F1) and (F2) can be the same or different. If the filler (F1) and (F2) are the same they can be seen together simply as filler (F) and their quantity is added. The important point is that the composition P1a and P1b to be blended contains already a filler.

Preferably the blending of the compositions P1 with halogen containing polymer and a filler is made by dry blending. Preferably the dry blend is also heated.

The (meth)acrylic copolymer (A1), the mixture of two (meth)acrylic copolymers (A1a) and (A1b), the impact modifier (IM1), the halogen containing polymer and the mineral filler are the same as defined before.

**With regard to a second variation of the manufacturing method for** a polymer composition according to the present invention, it comprises the step of
blending two compositions P1a and P2a characterized that
the composition P1a comprises an (meth)acrylic copolymer (A1) and an impact modifier (IM1) or a mixture of two (meth)acrylic copolymers (A1a) and (A1b) and impact modifier (IM1); and a filler (F1) and
the composition P2a comprises a halogen containing polymer and a filler F2
wherein the glass transition temperature Tg of the (meth)acrylic copolymer (A1) or the mixture of two (meth)acrylic copolymers (A1a) and (A1b) is less than 105°C and that the quantity of the fillers F1+F2 is between 1phr and 250phr in view of the halogen containing thermoplastic polymer.

**With regard to a third variation of the manufacturing method for** a polymer composition according to the present invention, it comprises the step of
blending two compositions P1b and P2b characterized that
the composition P1b comprises an (meth)acrylic copolymer (A1) and or a mixture of two (meth)acrylic copolymers (A1a) and (A1b) and impact modifier (IM1); and a filler (F1) and
the composition P2b comprises a halogen containing polymer, an impact modifier (IM1) and a filler F2
wherein the glass transition temperature Tg of the (meth)acrylic copolymer (A1) or the mixture of two (meth)acrylic copolymers (A1a) and (A1b) is less than 105°C and that the quantity of the fillers F1+F2 is between 1phr and 250phr in view of the halogen containing thermoplastic polymer.

The filler (F1) and (F2) can be the same or different. If the filler (F1) and (F2) are the same, they can be seen together simply as filler (F) and their quantity is added in order to obtain the entire amount in the composition according to the invention. The important point is that each of the two compositions P1a, P1b,P2a and P2b which are to be blended, contain already a filler.

Preferably the blending of the two compositions P1a and P2a; P1b and P2b is made by dry blending. Preferably the dry blend is also heated.

The (meth)acrylic copolymer (A1), the mixture of two (meth)acrylic copolymers (A1a) and (A1b), the impact modifier (IM1), the halogen containing polymer and the mineral filler are the same as defined before.

**With regard to the manufacturing method for** the composition P1b, it comprises the step of
a) mixing of at least one (meth)acrylic copolymer (A1) or a mixture of two (meth)acrylic copolymers (A1a) and (A1b) with at least one filler (F1)
wherein the (meth)acrylic copolymer (A1) or the mixture of two (meth)acrylic copolymers (A1a) and (A1b) and the mineral filler in step a) are in form of a dispersion in aqueous phase.

Preferably the (meth)acrylic copolymer (A1) or the mixture of two (meth) acrylic copolymers (A1a) and (A1b) in form of a dispersion in aqueous phase is obtained by emulsion polymerization.

Preferably the filler in form of a dispersion in aqueous phase is the slurry of the mineral filler as described above.

The (meth)acrylic copolymer (A1) and the mineral filler are the same as defined before.

**With regard to a variation of the manufacturing method for** a the composition P1b, it comprises the steps of
a) mixing of at least one (meth)acrylic copolymer (A1) or a mixture of two (meth)acrylic copolymers (A1a) and (A1b) with at least one filler (F) or (F1)
b) recovering of the mixture obtained in a)
c) drying the recovered mixture of step b)
wherein the (meth)acrylic copolymer (A1) or a mixture of two (meth)acrylic copolymers (A1a) and (A1b) and the mineral filler in step a) are in form of a dispersion in aqueous phase.

By recovering is meant partial or complete separation between the aqueous and solid phase, said solid phase comprises (meth)acrylic copolymer (A1) or the mixture of two (meth)acrylic copolymers (A1a) and (A1b) and the filler. In the case that a complete separation between the aqueous and solid phase of the mixture takes already place during the recovering step, no further drying is necessary. Or in other words the recovering and the drying of the mixture take place at the same time.

Preferably the recovery of the mixture of (meth)acrylic copolymer (A1) or the mixture of two (meth)acrylic copolymers (A1a) and (A1b) and filler, is made by spray drying, freeze drying or coagulation.

The (meth)acrylic copolymer (A1), the mixture of two (meth)acrylic copolymers (A1a) and (A1b) and the filler are the same as defined before.

Advantageously the recovery of the mixture of (meth)acrylic copolymer (A1) or the mixture of two (meth)acrylic copolymers (A1a) and (A1b) with the filler, is made by spray drying.

**With regard to the manufacturing method for** the composition P1a, it comprises the step of
a) mixing of at least one (meth)acrylic copolymer (A1) or a mixture of two (meth)acrylic copolymers (A1a) and (A1b) with an impact modifier (IM1) and with at least one filler (F1)
wherein the (meth)acrylic copolymer (A1) or the mixture of two (meth)acrylic copolymers (A1a) and (A1b), the impact modifier (IM1) and the mineral filler in step a) are in form of a dispersion in aqueous phase.

Preferably the (meth)acrylic copolymer (A1) or the mixture of two (meth) acrylic copolymers (A1a) and (A1b) in form of a dispersion in aqueous phase is obtained by emulsion polymerization.

Preferably the impact modifier (IM1) in form of a dispersion in aqueous phase is obtained by emulsion polymerization.

Preferably the filler in form of a dispersion in aqueous phase is the slurry of the mineral filler as described above.

The (meth)acrylic copolymer (A1), the impact modifier (IM1) and the mineral filler are the same as defined before.

**With regard to a variation of the manufacturing method for** a the composition P1a, it comprises the steps of
a) mixing of at least one (meth)acrylic copolymer (A1) or a mixture of two (meth)acrylic copolymers (A1a) and (A1b) with an impact modifier (IM1) and with at least one filler (F) or (F1)
b) recovering of the mixture obtained in a)
c) drying the recovered mixture of step b)
wherein the (meth)acrylic copolymer (A1) or a mixture of two (meth)acrylic copolymers (A1a) and (A1b), the impact modifier (IM1) and the mineral filler in step a) are in form of a dispersion in aqueous phase.

By recovering is meant partial or complete separation between the aqueous and solid phase, said solid phase comprises (meth)acrylic copolymer (A1) or the mixture of two (meth)acrylic copolymers (A1a) and (A1b), the impact modifier (IM1) and the filler. In the case that a complete separation between the aqueous and solid phase of the mixture takes already place during the recovering step, no further drying is necessary. Or in other words the recovering and the drying of the mixture take place at the same time.

Preferably the recovery of the mixture of (meth)acrylic copolymer (A1) or the mixture of two (meth)acrylic copolymers (A1a) and (A1b) the impact modifier (IM1) and filler, is made by spray drying, freeze drying or coagulation.

The (meth)acrylic copolymer (A1), the mixture of two (meth)acrylic copolymers (A1a) and (A1b), the impact modifier (IM1) and the filler are the same as defined before.

Advantageously the recovery of the mixture of (meth)acrylic copolymer (A1) or the mixture of two (meth)acrylic copolymers (A1a) and (A1b), the impact modifier (IM1) with the filler, is made by spray drying.

The mixture of the (meth)acrylic copolymer (A1) or the mixture of two (meth)acrylic copolymers (A1a) and (A1b), and optionally the impact modifier (IM1) with the filler after drying comprises less than 3wt% humidity and preferably less than 1.5wt% humidity and more preferably less than 1.2wt% humidity.

In the case of spray drying it is possible to mix the dispersion of mixture of (meth)acrylic copolymer (A1) or the mixture of two (meth)acrylic copolymers (A1a) and (A1b), optionally of the impact modifier (IM1) with the filler and the slurry or dispersion filler before adding the mixture to the spray drying apparatus. It is also possible to mix the dispersion of the mixture of (meth) acrylic copolymer (A1) or the mixture of two (meth)acrylic copolymers (A1a) and (A1b) and optionally the impact modifier (IM1) with the filler and the slurry or dispersion mineral filler inside the spray drying apparatus during the recovering step.

Spray drying is the preferred method for the recovering and/or drying for the manufacturing method for composition P1.

The composition P1a or P1b comprises between 1wt% and 50wt%, preferably between 2wt% and 50wt% and more preferably between 5wt% and 50wt% of one filler (F) or (F1) relatively to the complete composition made of (meth)acrylic copolymer (A1) or the mixture of two (meth)acrylic copolymers (A1a) and (A1b), optionally the impact modifier (IM1) and the filler, P1b made essentially of (meth)acrylic copolymer (A1) or the mixture of two (meth)acrylic copolymers (A1a) and (A1b) and the filler or P1a made essentially of (meth) acrylic copolymer (A1) or the mixture of two (meth)acrylic copolymers (A1a), impact modifier (IM1) and (A1b) and the filler.

If the composition comprises other additional (meth)acrylic copolymers, they are taken into account for the calculation of the weight ratio of the filler, if they fall under the definition of meth)acrylic copolymer (A1) or the mixture of two (meth)acrylic copolymers (A1a) and (A1b) in the composition according to the invention.

The composition P2a or P2b comprises between 1phr and 250phr, preferably between 2phr and 200phr of one filler (F) or (F2).

The present invention relates also to the use of the polymer composition P1a comprising a (meth)acrylic copolymer (A1) or a mixture of two (meth)acrylic copolymers (A1a) and (A1b), an impact modifier (IM1) and a filler (F) or (F1) to decrease the fusion time of composition comprising a halogen containing polymer and a filler (F) or (F2).

The present invention relates also to the use of the polymer composition P1a comprising a (meth)acrylic copolymer (A1) or a mixture of two (meth)acrylic copolymers (A1a) and (A1b), an impact modifier (IM1) and a filler F1 to decrease the fusion time of composition P2 comprising halogen containing polymer and a filler F2.

Preferably the polymer composition P1a comprising a (meth)acrylic copolymer (A1) or the mixture of two (meth)acrylic copolymers (A1a) and (A1b), an impact modifier (IM1) and a filler F1 is in form of the polymer powder.

The polymer powder of composition P1a comprises the agglomerated spherical particles of (meth)acrylic copolymer (A1) or the mixture of two (meth)acrylic copolymers (A1a) and (A1b), of impact modifier (IM1) and particles of the mineral filler.

The polymer powder has a volume median particle size D50 between 1µm and 500µm. Preferably the volume median particle size of the polymer powder is between 10µm and 450µm, more preferably between 15µm and 400µm and advantageously between 20µm and 300µm.

The D10 of the particle size distribution in volume is at least 7µm and preferably 10µm.

The D90 of the particle size distribution in volume is at most 800µm and preferably at most 500µm.

The powder may be homogenous in view of the composition concerning its components: the (meth)acrylic copolymer (A1) or the mixture of two (meth)acrylic copolymers (A1a) and (A1b), the impact modifier (IM1) and the mineral filler.

Homogeneous in the present invention signifies no important variation throughout the composition. If one or several small samples (1g or less) comprising several powder grain particles) is/are taken from a larger quantity (1kg) of the composition there is no important variation of the composition concerning the weight ratio of the respective components in the small sample in comparison to other small samples and the global composition. By no important variation is meant that the variation is less than 30% relative to the global composition, inside a 1wt% sample of P1a taken from whole P1a. As an example, if the global composition P1 comprises 40wt% of the inorganic compound (F), 30wt% of the (meth)acrylic copolymer (A1) and 30wt% of the impact modifier (IM1), a small first sample taken from the global composition that would comprise 30%wt of the inorganic compound (F), 35w% of the (meth)acrylic copolymer (A1) and 35wt% of the impact modifier (IM1) or small second sample taken from the global composition that would comprise 50%wt of the inorganic compound (F), 26wt% of the (meth)acrylic copolymer (A1) and 24wt% of the impact modifier (IM1), would signify a homogenous composition as the variation of ratio of the respective components throughout the small samples is within the 30% variation in view of the global composition of the sample.

The composition P1a is a homogenous powder having no important variation throughout the composition P1a comprising one (meth)acrylic copolymer (A1) or a mixture of two (meth)acrylic copolymers (A1a) and (A1b) and the impact modifier (IM1) with at least one filler (F) or (F1), with a variation of the composition P1a which is less than 30% relative to the global composition P1a of a 1wt% sample of P1a taken from P1a.

Preferably the variation of the components within the composition is less than 25%, more preferably less than 20%.

In an ideal case each powder particle or grain comprises the three components the meth)acrylic copolymer (A1) or the mixture of two (meth)acrylic copolymers (A1a) and (A1b), the impact modifier (IM1) and filler and is composed of aggregated particles of the three components.

The present invention according to claim 22 relates also to the use of the polymer composition P1b comprising (meth)acrylic copolymer (A1) or a mixture of two (meth)acrylic copolymers (A1a) and (A1b) and a filler (F) or (F1) to decrease the fusion time of composition comprising a halogen containing polymer, impact modifier (IM1) and a filler (F) or (F2).

Preferably the polymer composition P1b comprising (meth)acrylic copolymer (A1) or the mixture of two (meth)acrylic copolymers (A1a) and (A1b) and a filler F1 is in form of the polymer powder.

The polymer powder of composition P1b comprises the agglomerated spherical particles of meth)acrylic copolymer (A1) or the mixture of two (meth)acrylic copolymers (A1a) and (A1b) and particles of the mineral filler.

The polymer powder has a volume median particle size D50 between 1µm and **5**00µm. Preferably the volume median particle size of the polymer powder is between 10µm and 450um, more preferably between 15µm and 400um and advantageously between 20µm and **30**0µm.

The D10 of the particle size distribution in volume is at least 7um and preferably 10µm.

The D90 of the particle size distribution in volume is at most 800um and preferably at most 500µm.

The powder may be homogenous in view of the composition concerning its components: the meth)acrylic copolymer (A1) or the mixture of two (meth)acrylic copolymers (A1a) and (A1b) and the mineral filler.

Homogeneous in the present invention signifies no important variation throughout the composition. If one or several small samples (1g or less) comprising several powder grain particles) is/are taken from a larger quantity (1kg) of the composition there is no important variation of the composition concerning the weight ratio of the respective components in the small sample in comparison to other small samples and the global composition. By no important variation is meant that the variation is less than 30% relative to the global composition, inside a 1wt% sample of P1b taken from whole P1b. As an example, if the global composition P1 comprises 40wt% of the inorganic compound (F) and 60wt% of the (meth)acrylic copolymer (A1), a small first sample taken from the global composition that would comprise 35%wt of the inorganic compound (F) and 65w% of the (meth)acrylic copolymer (A1) or small second sample taken from the global composition that would comprise 42%wt of the inorganic compound (F) and 58wt% of the (meth)acrylic copolymer (A1), would signify a homogenous composition as the variation of ratio of the respective components throughout the small samples is within the 30% variation in view of the global composition of the sample.

The composition P1b is a homogenous powder having no important variation throughout the composition P1b comprising one (meth)acrylic copolymer (A1) or a mixture of two (meth)acrylic copolymers (A1a) and (A1b) with at least one filler (F) or (F1), with a variation of the composition P1b which is less than 30% relative to the global composition P1b of a 1wt% sample of P1b taken from P1b.

Preferably the variation of the components within the composition is less than 250, more preferably less than 20%.

In an ideal case each powder particle or grain comprises the two components the meth)acrylic copolymer (A1) or the mixture of two (meth)acrylic copolymers (A1a) and (A1b) and filler and is composed of aggregated particles of the two components.

The present invention relates also to an article comprising the polymer composition as described above. This article can be a profile, a pipe, a siding, a flooring film or sheet or a foamed article.

### [Methods of evaluation]

### Glass transition Temperature

The glass transitions (Tg) of the polymers or mixture of polymers are measured with equipment able to realize a thermo mechanical analysis. A RDAII "RHEOMETRICS DYNAMIC ANALYSER" proposed by the Rheometrics Company has been used. The thermo mechanical analysis measures precisely the visco-elastics changes of a sample in function of the temperature, the strain or the deformation applied. The used frequency is 1Hz. The apparatus records continuously, the sample deformation, keeping the stain fixed, during a controlled program of temperature variation.

The results are obtained by drawing, in function of the temperature, the elastic modulus (G'), the loss modulus and the tan delta. The Tg is higher temperature value read in the tan delta curve, when the derived of tan delta is equal to zero.

### Molecular Weight

The mass average molecular weight (Mw) of the polymers is measured with by size exclusion chromatography (SEC).

### Fusion efficiency

The fusion efficiency of the PVC polymer composition is estimated by measuring the fusion time with a torque rheometer based on ASTM D2538-02 (reapproved 2010). A shorter fusion time signifies a better fusion efficiency.

### Impact strength

ASTM D5420 standard was used to evaluate the dart drop impact resistance of the compositions. Normalized Mean Failure Energy (in*lbs/mil) was reported for comparison.

### [Examples]

### Abbreviations

MMA - methyl methacrylate
BA - n-butyl acrylate
EA - ethyl acrylate
PVC - polyvinylchloride

The filler for the (meth)acrylic copolymer (A1) or a mixture of two (meth)acrylic copolymers (A1a) and (A1b) as processing aid (PA) is calcium carbonate (CaCO₃). CaCO₃ slurry or dispersion is prepared according to the technique described in J.P. Pat. No. 59057913. Namely the slurry is obtained by mixing 270 parts of water, 0.72 parts of sodium polyacrylate and 729.3 parts of CaCO₃ of diam. 0.2 - 0.6 .mu. and 0.6% moisture and stirring for 20 min at shear rate 5. times. 102/s. The obtained solid content is 73wt% .

Comparative example 1: Charged into a reactor, with stirring, were 8600 g of water, 5.23 g of Na₂CO₃ and 38.20 g of sodium lauryl sulfate, and the mixture was stirred until complete dissolution. Three vacuum-nitrogen purges were carried out in succession and the reactor left under a slight vacuum. The reactor was then heated. At the same time, a mixture comprising 4687.2 g of methyl methacrylate and 520.8 g of n-butyl acrylate was nitrogen-degassed for 30 minutes. Next, the mixture was rapidly introduced into the reactor using a pump. When the temperature of the reaction mixture reached 55 degrees centigrade, 7.81 g of potassium persulfate dissolved in 98.08 g of water were introduced. The line was rinsed with 50 g of water. The reaction mixture was left to rise in temperature to the exothermal peak. The polymerization was then left to completion for 60 minutes after the exothermal peak. The reactor was cooled down to 30 degrees centigrade and the latex removed. The latex is dried by spray drying.

Example 1: Charged into a reactor, with stirring, were 8600 g of water, 5.23 g of Na₂CO₃ and 38.20 g of sodium lauryl sulfate, and the mixture was stirred until complete dissolution. Three vacuum-nitrogen purges were carried out in succession and the reactor left under a slight vacuum. The reactor was then heated. At the same time, a mixture comprising 3645.6 g of methyl methacrylate and 1562.4 g of n-butyl acrylate was nitrogen-degassed for 30 minutes. Next, the mixture was rapidly introduced into the reactor using a pump. When the temperature of the reaction mixture reached 55 degrees centigrade, 7.81 g of potassium persulfate dissolved in 98.08 g of water were introduced. The line was rinsed with 50 g of water. The reaction mixture was left to rise in temperature to the exothermal peak. The polymerization was then left to completion for 60 minutes after the exothermal peak. The reactor was cooled down to 30 degrees centigrade and the copolymer latex removed. The obtained solid content is 37.55wt%. The final product is obtained by mixing the copolymer latex and the slurry with the following ratio, 7 kg (7000 parts) of latex and 2.40 kg (2400 parts) of slurry, and spray dried in the conditions classically used for the latex alone.

The characteristics of PA samples of comparative example and example are summarized in table 2.

The prepared spray dried samples of comparative examples and examples are formulated at 1.5phr as processing aid (PA) in a PVC composition. The compositions are dry blended in a Papenmeyer equipment while increasing the temperature. PVC compositions are prepared with 20phr and 60phr CaCO₃ as filler in the PVC respectively.

**Table 1 - PVC compositions with two ratios of filler**

| components | Composition with quantities in phr | |
|---|---|---|
| PVC | 100 | 100 |
| 1pack CaZn | 4 | 4 |
| CaCo3 | 20 | 60 |
| IM1 | 4 | 4 |
| PA from respective comparative examples and examples | 1.5 | 1.5 |

As polyvinylchloride PVC S110P from Kemone is used. As one pack stabilizer Ca/ZN Naftosafe GWX 380 D-3 from Chemson is used. As IM1 and acrylic core/shell impact modifier is used.

The samples are tested for fusion efficiency with a torque rheometer.

The fusion efficiency is evaluated relatively to composition comprising comparative example 1. Comparative example 1 is a processing aid composition without a filler. Its fusion efficiency is judged with ++. All other examples or comparative examples that have fusion time within an interval of +/-10s are also judged ++. If the fusion time is faster in an interval -25s to -10s the example is judged +++. If the fusion time is faster in an interval -50s to -25s the example is judged ++++. If the fusion time is 50s faster than comparative example 1 in an interval up to -50s the example is judged +++++. If the fusion time is slower than comparative example 1 and 2 with at least +10s it is judged +.

Results of fusion efficiency are summarized in table 2.

**Table 2 Characteristics of PA made in the respective examples and comparative examples and their evaluation of fusion efficiency in a PVC compositions**

| | PA | Filler content in PA / [wt%] | Tg of PA / [°C] | Mw / [*10⁶ g/mol] | Fusion efficience | |
|---|---|---|---|---|---|---|
| | | | | | 20phr | 60phr |
| Comparitive example 1 | MMA/BA 90/10 | 0 | 107 | 4.5 | ++ | ++ |
| Example 1 | MMA/BA 70/30 | 40 | 72 | 4.5 | ++++ | ++ |

The example 1 in table 2 shows that the fusion efficiency of a composition of a (meth)acrylic copolymer (A1) comprising a filler in a filled halogen containing thermoplastic polymer (PVC), does perform equal or better than the comparative examples, especially with low filler in composition.

**Table 3 Characteristics of PA made in the respective examples and comparative examples and their evaluation of impact strength in a composition**

| | PA | Filler content in PA / [wt%] | Tg of PA / [°C] | Mw / [*10⁶ g/mol] | Gardner falling weight Impact strength ASTM D5420 [in*lbs/mil] | |
|---|---|---|---|---|---|---|
| | | | | | 20phr | 60phr |
| Comparitive example 1 | MMA/BA 90/10 | 0 | 107 | 4.5 | 1.1 | 0.92 |
| Example 1 | MMA/BA 70/30 | 40 | 72 | 4.5 | 1.37 | 0.89 |

The example 1 in table 3 show that the impact strength of a composition of a (meth)acrylic copolymer (A1) with a low Tg comprising a filler in a filled impact modified halogen containing thermoplastic polymer (PVC), possesses a good compromise. At low filled composition (20phr) the impact performance is much more than high Tg (meth)acrylic copolymer (A1) process aid (PA without filler already in PA (comparative example 1). At higher filled compositions (60phr) the impact performance is equal than that of a high Tg (meth)acrylic copolymer (A1) process aid (PA) without filler already in PA (comparative example 1).

## Claims

1. A composition comprising:
a) a (meth)acrylic copolymer (A1) or a mixture of two (meth)acrylic copolymers (A1a) and (A1b),
b) a filler (F) or a mixture of two fillers (F1) and (F2)
c) a halogen containing thermoplastic polymer and
d) an impact modifier (IM1) which is a polymer particle having a multilayer structure, comprising at least one layer (IM1L1) comprising a polymer (L1) having a glass transition temperature below 0°C and at least another layer (IM1L2) comprising a polymer (L2) having a glass transition temperature over 45°C, said glass transition temperature is measured as described in the specification;
characterized that the glass transition temperature Tg of the (meth)acrylic copolymer (A1) or the mixture of two (meth)acrylic copolymers (A1a) and (A1b) is between 60°C and 105°C, said glass transition temperature Tg is measured as described in the specification, and that the quantity of the filler F or the mixture of two fillers (F1) and (F2) is between 5phr and 120phr relative to the halogen containing thermoplastic polymer and
characterized that the composition comprises between 0.15phr and 12phr the impact modifier (IM1) and that a part of the filler (F) or a part of the mixture of two fillers (F1) and (F2) is added to the composition with the (meth)acrylic copolymer (A1) or the mixture of two (meth)acrylic copolymers (A1a) and (A1b) and the other part of the filler (F) or the other part of the mixture of two fillers (F1) and (F2) is added to the composition either apart or already with halogen containing thermoplastic polymer.

2. Composition according to claim 1, wherein the (meth)acrylic copolymer (A1) or the mixture of two (meth)acrylic copolymers (A1a) and (A1b) is chosen from a copolymer comprising at least 50wt% of methyl methacrylate.

3. Composition according to any of claims 1 to 2 comprising between 0.01phr and 20phr of the (meth)acrylic copolymer (A1) or the mixture of two (meth)acrylic copolymers (A1a) and (A1b) relative to the halogen containing thermoplastic polymer.

4. Composition according to any of claims 1 to 3 wherein at least a part of the filler (F) or the mixture of two fillers (F1) and (F2) is a mineral filler chosen from calcium carbonate, calcinated clay, silica (fumed or precipitated), clay, Montmorillonite (nano-clay), zeolite or perlite.

5. Composition according to any of claims 1 to 4 wherein the polymer particle having a multilayer structure is a core/shell polymer.

6. A process for preparing the composition according to claims 1 to 5, said process comprises the step of
blending a compositions P1a with a halogen containing polymer and a filler (F) or (F2)
characterized that the composition P1a comprises an (meth)acrylic copolymer (A1) or a mixture of two (meth)acrylic copolymers (A1a) and (A1b), an impact modifier (IM1) which is polymer particle having a multilayer structure comprising at least one layer (IM1L1) comprising a polymer (L1) having a glass transition temperature below 0°C and at least another layer (IM1L2) comprising a polymer (L2) having a glass transition temperature over 45°C, said glass transition temperature Tg is measured as described in the specification, and a filler (F) or (F1) and
wherein the glass transition temperature Tg of the (meth)acrylic copolymer is between 60°C and 105°C, said glass transition temperature Tg is measured as described in the specification, and that the quantity of the filler (F) or (F1) and (F2) together is between 5phr and 120phr in view of the halogen containing thermoplastic polymer and the composition comprises between 0.15phr and 12phr the impact modifier (IM1).

7. A process for preparing the composition according to claims 1 to 5, said process comprises the step of
blending a compositions P1b with a halogen containing
polymer, an impact modifier (IM1) which is polymer particle having a multilayer structure comprising at least one layer (IM1L1) comprising a polymer (L1) having a glass transition temperature below 0°C and at least another layer (IM1L2) comprising a polymer (L2) having a glass transition temperature over 45°C, said glass transition temperature Tg is measured as described in the specification and a filler (F) or (F2)
characterized that the composition P1b comprises an (meth)acrylic copolymer (A1) or a mixture of two (meth)acrylic copolymers (A1a) and (A1b) and a filler (F) or (F1) and
wherein the glass transition temperature Tg of the (meth)acrylic copolymer is between 60°C and 105°C, said glass transition temperature Tg is measured as described in the specification, and that the quantity of the filler (F) or (F1) and (F2) together is between 5phr and 120phr in view of the halogen containing thermoplastic polymer and the composition comprises between 0.15phr and 12phr the impact modifier (IM1).

8. A process for preparing the composition according to claims 1 to 5, said process comprises the step of
blending two compositions P1a and P2a characterized that
the composition P1a comprises an (meth)acrylic copolymer (A1) or mixture of two (meth)acrylic copolymers (A1a) and (A1b), an impact modifier (IM1) which is polymer particle having a multilayer structure comprising at least one layer (IM1L1) comprising a polymer (L1) having a glass transition temperature below 0°C and at least another layer (IM1L2) comprising a polymer (L2) having a glass transition temperature over 45°C, said glass transition temperature Tg is measured as described in the specification and a filler F or F1 and
the composition P2a comprises a halogen containing polymer and a filler F or F2
characterized that the glass transition temperature Tg of the (meth)acrylic copolymer (A1) or mixture of two (meth)acrylic copolymers (A1a) and (A1b) is between 60°C and 105°C, said glass transition temperature Tg is measured as described in the specification, and that the quantity of the filler F or F1 and F2 together is between 5phr and 120phr in view of the halogen containing thermoplastic polymer and the composition comprises between 0.15phr and 12phr the impact modifier (IM1).

9. A process for preparing the composition according to claims 1 to 5, said process comprises the step of
blending two compositions P1b and P2b characterized that
the composition P1b comprises an (meth)acrylic copolymer (A1) or mixture of two (meth)acrylic copolymers (A1a) and (A1b) and a filler F or F1 and
the composition P2b comprises a halogen containing polymer, an impact modifier (IM1) which is polymer particle having a multilayer structure comprising at least one layer (IM1L1) comprising a polymer (L1) having a glass transition temperature below 0°C and at least another layer (IM1L2) comprising a polymer (L2) having a glass transition temperature over 45°C, said glass transition temperature Tg is measured as described in the specification and a filler F or F2
characterized that the glass transition temperature Tg of the (meth)acrylic copolymer (A1) or mixture of two (meth)acrylic copolymers (A1a) and (A1b) is between 60°C and 105°C, said glass transition temperature Tg is measured as described in the specification, and that the quantity of the filler F or F1 and F2 together is between 5phr and 120phr in view of the halogen containing thermoplastic polymer and the composition comprises between 0.15phr and 12phr the impact modifier (IM1).

10. The process according to claim 7 or 9, characterized that the composition P1b is obtained by a manufacturing method comprising the step of
a) mixing of at least one (meth)acrylic copolymer (A1) or a mixture of two (meth)acrylic copolymers (A1a) and (A1b) with at least one filler (F) or (F1)
wherein the (meth)acrylic copolymer (A1) or the mixture of two (meth)acrylic copolymers (A1a) and (A1b) and the filler F) or (F1) in step a) are in form of a dispersion in aqueous phase.

11. The process according to claim 7 or 9, characterized that the composition P1b is obtained by a manufacturing method comprising the step of
a) mixing of at least one (meth)acrylic copolymer (A1) or a mixture of two (meth)acrylic copolymers (A1a) and (A1b) with at least one filler (F) or (F1)
b)recovering of the mixture obtained in a)
c)drying the recovered mixture of step b)
wherein the (meth)acrylic copolymer (A1) or a mixture of two (meth)acrylic copolymers (A1a) and (A1b) and the mineral filler in step a) are in form of a dispersion in aqueous phase.

12. The process according to claim 6 or 8, characterized that the composition P1a is obtained by a manufacturing method comprising the step of
a) mixing of at least one (meth)acrylic copolymer (A1) or a mixture of two (meth)acrylic copolymers (A1a) and (A1b) with an impact modifier (IM1) which is polymer particle having a multilayer structure comprising at least one layer (IM1L1) comprising a polymer (L1) having a glass transition temperature below 0°C and at least another layer (IM1L2) comprising a polymer (L2) having a glass transition temperature over 45°C, said glass transition temperature Tg is measured as described in the specification and with at least one filler (F1)
wherein the (meth)acrylic copolymer (A1) or the mixture of two (meth)acrylic copolymers (A1a) and (A1b), the impact modifier (IM1) and the mineral filler in step a) are in form of a dispersion in aqueous phase.

13. The process according to claim 6 or 8, characterized that the composition P1a is obtained by a manufacturing method comprising the step of
a) mixing of at least one (meth)acrylic copolymer (A1) or a mixture of two (meth)acrylic copolymers (A1a) and (A1b) with an impact modifier (IM1) which is polymer particle having a multilayer structure comprising at least one layer (IM1L1) comprising a polymer (L1) having a glass transition temperature below 0°C and at least another layer (IM1L2) comprising a polymer (L2) having a glass transition temperature over 45°C, said glass transition temperature Tg is measured as described in the specification and with at least one filler (F1),
b)recovering of the mixture obtained in a),
c)drying the recovered mixture of step b)
wherein the (meth)acrylic copolymer (A1) or the mixture of two (meth)acrylic copolymers (A1a) and (A1b), the impact modifier (IM1) and the mineral filler in step a) are in form of a dispersion in aqueous phase.

14. The process according to any of claims 6 to 13, characterized that the composition P1a or P1b is a homogenous powder having no important variation throughout the composition P1b comprising one (meth)acrylic copolymer (A1) or a mixture of two (meth)acrylic copolymers (A1a) and (A1b) with at least one filler (F) or (F1); and throughout the composition P1b comprising one (meth)acrylic copolymer (A1) or the mixture of two (meth)acrylic copolymers (A1a), an impact modifier (IM1) which is polymer particle having a multilayer structure comprising at least one layer (IM1L1) comprising a polymer (L1) having a glass transition temperature below 0°C and at least another layer (IM1L2) comprising a polymer (L2) having a glass transition temperature over 45°C, said glass transition temperature Tg is measured as described in the specification, with at least one filler (F) or (F1); with a variation of the composition P1a and P1b which is less than 30% relative to the global composition P1a and P1b of a 1wt% sample of P1a and P1b taken from P1a and P1b respectively.

15. Article comprising a composition according to any of claims 1 to 5 or a composition prepared by a process according to any of claims 6 to 14.

16. Use of a composition comprising an (meth)acrylic copolymer (A1) or a mixture of two (meth) acrylic copolymers (A1a) and (A1b), an impact modifier (IM1) which is polymer particle having a multilayer structure comprising at least one layer (IM1L1) comprising a polymer (L1) having a glass transition temperature below 0°C and at least another layer (IM1L2) comprising a polymer (L2) having a glass transition temperature over 45°C, said glass transition temperature Tg is measured as described in the specification, and a filler (F) or (F1), which can be used to decrease the fusion time of composition comprising a halogen containing thermoplastic polymer and a filler (F) or (F2) wherein the glass transition temperature Tg of the (meth)acrylic copolymer or the mixture of two (meth) acrylic copolymers (A1a) and (A1b) is less than 105°C, said glass transition temperature Tg is measured as described in the specification, and that the quantity of the filler (F) or (F1) and F2 together is between 5phr and 120phr in view of the halogen containing thermoplastic polymer and the composition comprises between 0.15phr and 12phr the impact modifier (IM1).

17. Use of a composition comprising an (meth)acrylic copolymer (A1) or a mixture of two (meth) acrylic copolymers (A1a) and (A1b), an impact modifier (IM1) which is polymer particle having a multilayer structure comprising at least one layer (IM1L1) comprising a polymer (L1) having a glass transition temperature below 0°C and at least another layer (IM1L2) comprising a polymer (L2) having a glass transition temperature over 45°C, said glass transition temperature Tg is measured as described in the specification, and a filler F1 to decrease the fusion time of composition comprising halogen containing polymer and a filler F2 wherein the glass transition temperature Tg of the (meth)acrylic copolymer (A1) or the mixture of two (meth)acrylic copolymers (A1a) and (A1b) is between 60°C and 105°C, said glass transition temperature Tg is measured as described in the specification, and that the quantity of the filler F1 and F2 together is between 5phr and 120phr in view of the halogen containing thermoplastic polymer and the composition comprises between 0.15phr and 12phr the impact modifier (IM1).

18. Use of a composition comprising an (meth)acrylic copolymer (A1) or a mixture of two (meth) acrylic copolymers (A1a) and (A1b) and a filler (F) or (F1) to decrease the fusion time of composition comprising a halogen containing polymer, an impact modifier (IM1) which is polymer particle having a multilayer structure comprising at least one layer (IM1L1) comprising a polymer (L1) having a glass transition temperature below 0°C and at least another layer (IM1L2) comprising a polymer (L2) having a glass transition temperature over 45°C, said glass transition temperature Tg is measured as described in the specification, and a filler (F) or (F2) wherein the glass transition temperature Tg of the (meth)acrylic copolymer or the mixture of two (meth)acrylic copolymers (A1a) and (A1b) is between 60°C and 105°C, said glass transition temperature Tg is measured as described in the specification, and that the quantity of the filler (F) or (F1) and F2 together is between 5phr and 120phr in view of the halogen containing thermoplastic polymer and the composition comprises between 0.15phr and 12phr the impact modifier (IM1).

19. Use of a composition comprising an (meth)acrylic copolymer (A1) or a mixture of two (meth) acrylic copolymers (A1a) and (A1b), an impact modifier (IM1) which is polymer particle having a multilayer structure comprising at least one layer (IM1L1) comprising a polymer (L1) having a glass transition temperature below 0°C and at least another layer (IM1L2) comprising a polymer (L2) having a glass transition temperature over 45°C, said glass transition temperature Tg is measured as described in the specification, and a filler F1 to decrease the fusion time of composition comprising halogen containing polymer and a filler F2 wherein the glass transition temperature Tg of the (meth)acrylic copolymer (A1) or the mixture of two (meth)acrylic copolymers (A1a) and (A1b) is between 60°C and 105°C, said glass transition temperature Tg is measured as described in the specification, and that the quantity of the filler F1 and F2 together is between 5phr and 120phr in view of the halogen containing thermoplastic polymer and the composition comprises between 0.15phr and 12phr the impact modifier (IM1).

20. Method to decrease the fusion time of composition comprising a halogen containing polymer and a filler (F) or (F2) by adding a composition comprising an (meth)acrylic copolymer (A1) or a mixture of two (meth)acrylic copolymers (A1a) and (A1b), an impact modifier (IM1) which is polymer particle having a multilayer structure comprising at least one layer (IM1L1) comprising a polymer (L1) having a glass transition temperature below 0°C and at least another layer (IM1L2) comprising a polymer (L2) having a glass transition temperature over 45°C, said glass transition temperature Tg is measured as described in the specification, and a filler (F) or (F1) wherein the glass transition temperature Tg of the (meth)acrylic copolymer or the mixture of two (meth)acrylic copolymers (A1a) and (A1b) is between 60°C and 105°C, said glass transition temperature Tg is measured as described in the specification, and that the quantity of the filler (F) or (F1) and F2 together is between 5phr and 120phr in view of the halogen containing thermoplastic polymer and the composition comprises between 0.15phr and 12phr the impact modifier (IM1).

21. Method to decrease the fusion time of composition P2a comprising halogen containing thermoplastic polymer and a filler F2 by adding a composition P1a comprising an (meth)acrylic copolymer (A1) or a mixture of two (meth)acrylic copolymers (A1a) and (A1b), an impact modifier (IM1) which is polymer particle having a multilayer structure comprising at least one layer (IM1L1) comprising a polymer (L1) having a glass transition temperature below 0°C and at least another layer (IM1L2) comprising a polymer (L2) having a glass transition temperature over 45°C, said glass transition temperature Tg is measured as described in the specification, and a filler F1, wherein the glass transition temperature Tg of the (meth) acrylic copolymer (A1) or the mixture of two (meth)acrylic copolymers (A1a) and (A1b) is between 60°C and 105°C, said glass transition temperature Tg is measured as described in the specification, and that the quantity of the filler F1 and F2 together is between 5phr and 120phr in view of the halogen containing thermoplastic polymer and the composition comprises between 0.15phr and 12phr the impact modifier (IM1).

22. Method to decrease the fusion time of composition comprising a halogen containing polymer, an impact modifier (IM1) which is polymer particle having a multilayer structure comprising at least one layer (IM1L1) comprising a polymer (L1) having a glass transition temperature below 0°C and at least another layer (IM1L2) comprising a polymer (L2) having a glass transition temperature over 45°C, said glass transition temperature Tg is measured as described in the specification, and a filler (F) or (F2) by adding composition P1b comprising an (meth) acrylic copolymer (A1) or a mixture of two (meth)acrylic copolymers (A1a) and (A1b) and a filler (F) or (F1), wherein the glass transition temperature Tg of the (meth)acrylic copolymer or the mixture of two (meth)acrylic copolymers (A1a) and (A1b) is between 60°C and 105°C, said glass transition temperature Tg is measured as described in the specification, and that the quantity of the filler (F) or (F1) and F2 together is between 5phr and 120phr in view of the halogen containing thermoplastic polymer and the composition comprises between 0.15phr and 12phr the impact modifier (IM1).

23. Method to decrease the fusion time of composition P2a comprising halogen containing polymer and a filler F2 by adding composition P1a comprising an (meth)acrylic copolymer (A1) or a mixture of two (meth) acrylic copolymers (A1a) and (A1b), an impact modifier (IM1) which is polymer particle having a multilayer structure comprising at least one layer (IM1L1) comprising a polymer (L1) having a glass transition temperature below 0°C and at least another layer (IM1L2) comprising a polymer (L2) having a glass transition temperature over 45°C, said glass transition temperature Tg is measured as described in the specification, and a filler F1, wherein the glass transition temperature Tg of the (meth)acrylic copolymer (A1) or the mixture of two (meth)acrylic copolymers (A1a) and (A1b) is between 60°C and 105°C, said glass transition temperature Tg is measured as described in the specification, and that the quantity of the filler F1 and F2 together is between 5phr and 120phr in view of the halogen containing thermoplastic polymer and the composition comprises between 0.15phr and 12phr the impact modifier (IM1).

## Patentansprüche

1. Zusammensetzung, umfassend:
a) ein (Meth)acrylcopolymer (A1) oder eine Mischung von zwei (Meth)acrylcopolymeren (A1a) und (A1b),
b) einen Füllstoff (F) oder eine Mischung von zwei Füllstoffen (F1) und (F2),
c) ein halogenhaltiges thermoplastisches Polymer und
d) einen Schlagzähigkeitsmodifikator (IM1), bei dem es sich um ein Polymerteilchen mit einer Mehrschichtstruktur handelt, die mindestens eine Schicht (IM1L1), die ein Polymer (L1) mit einer Glasübergangstemperatur unter 0 °C umfasst, und mindestens eine weitere Schicht (IM1L2), die ein Polymer (L2) mit einer Glasübergangstemperatur über 45°C umfasst, umfasst, wobei die Glasübergangstemperatur wie in der Patentschrift beschrieben gemessen wird;
**dadurch gekennzeichnet, dass** die Glasübergangstemperatur Tg des (Meth)acrylcopolymers (A1) bzw. der Mischung von zwei (Meth)acrylcopolymeren (A1a) und (A1b) zwischen 60°C und 105 °C liegt, wobei die Glasübergangstemperatur Tg wie in der Patentschrift beschrieben gemessen wird, und dass die Menge des Füllstoffs (F) bzw. der Mischung von zwei Füllstoffen (F1) und (F2) zwischen 5 phr und 120 phr, bezogen auf das halogenhaltige thermoplastische Polymer, liegt, und
**dadurch gekennzeichnet, dass** die Zusammensetzung zwischen 0,15 phr und 12 phr des Schlagzähigkeitsmodifikators (IM1) umfasst und dass ein Teil des Füllstoffs (F) bzw. ein Teil der Mischung von zwei Füllstoffen (F1) und (F2) mit dem (Meth)acrylcopolymer (A1) bzw. der Mischung von zwei (Meth)acrylcopolymeren (A1a) und (A1b) zu der Zusammensetzung gegeben wird und der andere Teil des Füllstoffs (F) bzw. der andere Teil der Mischung von zwei Füllstoffen (F1) und (F2) entweder getrennt oder bereits mit halogenhaltigem thermoplastischem Polymer zu der Zusammensetzung gegeben wird.

2. Zusammensetzung nach Anspruch 1, wobei das (Meth)acrylcopolymer (A1) bzw. die Mischung von zwei (Meth)acrylcopolymeren (A1a) und (A1b) aus einem Copolymer, das mindestens 50 Gew.-% Methylmethacrylat umfasst, ausgewählt ist.

3. Zusammensetzung nach einem der Ansprüche 1 bis 2, umfassend zwischen 0,01 phr und 20 phr des (Meth)acrylcopolymers (A1) bzw. der Mischung von zwei (Meth)acrylcopolymeren (A1a) und (A1b), bezogen auf das halogenhaltige thermoplastische Polymer.

4. Zusammensetzung nach einem der Ansprüche 1 bis 3, wobei es sich bei mindestens einem Teil des Füllstoffs (F) bzw. der Mischung von zwei Füllstoffen (F1) und (F2) um einen Mineralfüllstoff handelt, der aus Calciumcarbonat, calciniertem Ton, Kieselsäure (pyrogen oder gefällt), Ton, Montmorillonit (Nanoton), Zeolith oder Perlit ausgewählt ist.

5. Zusammensetzung nach einem der Ansprüche 1 bis 4, wobei es sich bei dem Polymerteilchen mit einer Mehrschichtstruktur um ein Kern/Schale-Polymer handelt.

6. Verfahren zur Herstellung der Zusammensetzung nach den Ansprüchen 1 bis 5, wobei das Verfahren den folgenden Schritt umfasst:
Mischen einer Zusammensetzung P1a mit einem halogenhaltigen Polymer und einem Füllstoff (F) oder (F2),
**dadurch gekennzeichnet, dass** die Zusammensetzung P1a ein (Meth)acrylcopolymer (A1) bzw. eine Mischung von zwei (Meth)acrylcopolymeren (A1a) und (A1b), einen Schlagzähigkeitsmodifikator (IM1), bei dem es sich um ein Polymerteilchen mit einer Mehrschichtstruktur handelt, die mindestens eine Schicht (IM1L1), die ein Polymer (L1) mit einer Glasübergangstemperatur unter 0 °C umfasst, und mindestens eine weitere Schicht (IM1L2), die ein Polymer (L2) mit einer Glasübergangstemperatur über 45°C umfasst, umfasst, wobei die Glasübergangstemperatur Tg wie in der Patentschrift beschrieben gemessen wird, und einen Füllstoff (F) oder (F1) umfasst, und
wobei die Glasübergangstemperatur Tg des (Meth)acrylcopolymers zwischen 60°C und 105 °C liegt, wobei die Glasübergangstemperatur Tg wie in der Patentschrift beschrieben gemessen wird, und wobei die Menge des Füllstoffs (F) bzw. (F1) und (F2) zusammen zwischen 5 phr und 120 phr, bezogen auf das halogenhaltige thermoplastische Polymer, liegt, und die Zusammensetzung zwischen 0,15 phr und 12 phr des Schlagzähigkeitsmodifikators (IM1) umfasst.

7. Verfahren zur Herstellung der Zusammensetzung nach den Ansprüchen 1 bis 5, wobei das Verfahren den folgenden Schritt umfasst:
Mischen einer Zusammensetzung P1b mit einem halogenhaltigen Polymer, einem Schlagzähigkeitsmodifikator (IM1), bei dem es sich um ein Polymerteilchen mit einer Mehrschichtstruktur handelt, die mindestens eine Schicht (IM1L1), die ein Polymer (L1) mit einer Glasübergangstemperatur unter 0 °C umfasst, und mindestens eine weitere Schicht (IM1L2), die ein Polymer (L2) mit einer Glasübergangstemperatur über 45°C umfasst, umfasst,
wobei die Glasübergangstemperatur Tg wie in der Patentschrift beschrieben gemessen wird, und einem Füllstoff (F) oder (F2),
**dadurch gekennzeichnet, dass** die Zusammensetzung P1b ein (Meth)acrylcopolymer (A1) oder eine Mischung von zwei (Meth)acrylcopolymeren (A1a) und (A1b) und einen Füllstoff (F) oder (F1) umfasst, und
wobei die Glasübergangstemperatur Tg des (Meth)acrylcopolymers zwischen 60°C und 105 °C liegt, wobei die Glasübergangstemperatur Tg wie in der Patentschrift beschrieben gemessen wird, und wobei die Menge des Füllstoffs (F) oder (F1) und (F2) zusammen zwischen 5 phr und 120 phr, bezogen auf das halogenhaltige thermoplastische Polymer, liegt, und die Zusammensetzung zwischen 0,15 phr und 12 phr des Schlagzähigkeitsmodifikators (IM1) umfasst.

8. Verfahren zur Herstellung der Zusammensetzung nach den Ansprüchen 1 bis 5, wobei das Verfahren den folgenden Schritt umfasst:
Mischen von zwei Zusammensetzungen P1a und P2a, **dadurch gekennzeichnet, dass**
die Zusammensetzung P1a ein (Meth)acrylcopolymer (A1) oder eine Mischung von zwei (Meth)acrylcopolymeren (A1a) und (A1b), einen Schlagzähigkeitsmodifikator (IM1), bei dem es sich um ein Polymerteilchen mit einer Mehrschichtstruktur handelt, die mindestens eine Schicht (IM1L1), die ein Polymer (L1) mit einer Glasübergangstemperatur unter 0 °C umfasst, und mindestens eine weitere Schicht (IM1L2), die ein Polymer (L2) mit einer Glasübergangstemperatur über 45°C umfasst, umfasst, wobei die Glasübergangstemperatur Tg wie in der Patentschrift beschrieben gemessen wird, und einen Füllstoff F oder F1 umfasst, und
die Zusammensetzung P2a ein halogenhaltiges Polymer und einen Füllstoff F oder F2 umfasst,
**dadurch gekennzeichnet, dass** die Glasübergangstemperatur Tg des (Meth)acrylcopolymers (A1) bzw. der Mischung von zwei (Meth)acrylcopolymeren (A1a) und (A1b) zwischen 60°C und 105 °C liegt, wobei die Glasübergangstemperatur Tg wie in der Patentschrift beschrieben gemessen wird, und dass die Menge des Füllstoffs F bzw. F1 und F2 zusammen zwischen 5 phr und 120 phr, bezogen auf das halogenhaltige thermoplastische Polymer, liegt, und dass die Zusammensetzung zwischen 0,15 phr und 12 phr des Schlagzähigkeitsmodifikators (IM1) umfasst.

9. Verfahren zur Herstellung der Zusammensetzung nach den Ansprüchen 1 bis 5, wobei das Verfahren den folgenden Schritt umfasst:
Mischen von zwei Zusammensetzungen P1b und P2b, **dadurch gekennzeichnet, dass**
die Zusammensetzung P1b ein (Meth)acrylcopolymer (A1) oder eine Mischung von zwei (Meth)acryl-copolymeren (A1a) und (A1b) und einen Füllstoff F oder F1 umfasst und
die Zusammensetzung P2b ein halogenhaltiges Polymer, einen Schlagzähigkeitsmodifikator (IM1), bei dem es sich um ein Polymerteilchen mit einer Mehrschichtstruktur handelt, die mindestens eine Schicht (IM1L1), die ein Polymer (L1) mit einer Glasübergangstemperatur unter 0 °C umfasst, und mindestens eine weitere Schicht (IM1L2), die ein Polymer (L2) mit einer Glasübergangstemperatur über 45°C umfasst, umfasst, wobei die Glasübergangstemperatur Tg wie in der Patentschrift beschrieben gemessen wird, und einen Füllstoff F oder F2 umfasst,
**dadurch gekennzeichnet, dass** die Glasübergangstemperatur Tg des (Meth) acrylcopolymers (A1) bzw. der Mischung von zwei (Meth)acrylcopolymeren (A1a) und (A1b) zwischen 60°C und 105 °C liegt, wobei die Glasübergangstemperatur Tg wie in der Patentschrift beschrieben gemessen wird, und dass die Menge des Füllstoffs F bzw. F1 und F2 zusammen zwischen 5 phr und 120 phr, bezogen auf das halogenhaltige thermoplastische Polymer, liegt, und dass die Zusammensetzung zwischen 0,15 phr und 12 phr des Schlagzähigkeitsmodifikators (IM1) umfasst.

10. Verfahren nach Anspruch 7 oder 9, **dadurch gekennzeichnet, dass** die Zusammensetzung P1b durch ein Herstellungsverfahren erhalten wird, das den folgenden Schritt umfasst:
a) Mischen von mindestens einem (Meth)acrylcopolymer (A1) oder einer Mischung von zwei (Meth)acrylcopolymeren (A1a) und (A1b) mit mindestens einem Füllstoff (F) oder (F1),
wobei das (Meth)acrylcopolymer (A1) bzw. die Mischung von zwei (Meth)acrylcopolymeren (A1a) und (A1b) und der Füllstoff (F) bzw. (F1) in Schritt a) in Form einer Dispersion in wässriger Phase vorliegen.

11. Verfahren nach Anspruch 7 oder 9, **dadurch gekennzeichnet, dass** die Zusammensetzung P1b durch ein Herstellungsverfahren erhalten wird, das den folgenden Schritt umfasst:
a) Mischen von mindestens einem (Meth)acrylcopolymer (A1) oder einer Mischung von zwei (Meth)acrylcopolymeren (A1a) und (A1b) mit mindestens einem Füllstoff (F) oder (F1),
b) Gewinnen der in a) erhaltenen Mischung,
c) Trocknen der in Schritt b) gewonnenen Mischung,
wobei das (Meth)acrylcopolymer (A1) bzw. eine Mischung von zwei (Meth)acrylcopolymeren (A1a) und (A1b) und der Mineralfüllstoff in Schritt a) in Form einer Dispersion in wässriger Phase vorliegen.

12. Verfahren nach Anspruch 6 oder 8, **dadurch gekennzeichnet, dass** die Zusammensetzung P1a durch ein Herstellungsverfahren erhalten wird, das den folgenden Schritt umfasst:
a) Mischen von mindestens einem (Meth)acrylcopolymer (A1) oder einer Mischung von zwei (Meth)acrylcopolymeren (A1a) und (A1b) mit einem Schlagzähigkeitsmodifikator (IM1), bei dem es sich um ein Polymerteilchen mit einer Mehrschichtstruktur handelt, die mindestens eine Schicht (IM1L1), die ein Polymer (L1) mit einer Glasübergangstemperatur unter 0 °C umfasst, und mindestens eine weitere Schicht (IM1L2), die ein Polymer (L2) mit einer Glasübergangstemperatur über 45°C umfasst, umfasst, wobei die Glasübergangstemperatur Tg wie in der Patentschrift beschrieben gemessen wird, und mindestens einem Füllstoff (F1),
wobei das (Meth)acrylcopolymer (A1) bzw. die Mischung von zwei (Meth)acrylcopolymeren (A1a) und (Alb), der Schlagzähigkeitsmodifikator (IM1) und der Mineralfüllstoff in Schritt a) in Form einer Dispersion in wässriger Phase vorliegen.

13. Verfahren nach Anspruch 6 oder 8, **dadurch gekennzeichnet, dass** die Zusammensetzung P1a durch ein Herstellungsverfahren erhalten wird, das den folgenden Schritt umfasst:
a) Mischen von mindestens einem (Meth)acrylcopolymer (A1) oder einer Mischung von zwei (Meth)acrylcopolymeren (A1a) und (A1b) mit einem Schlagzähigkeitsmodifikator (IM1), bei dem es sich um ein Polymerteilchen mit einer Mehrschichtstruktur handelt, die mindestens eine Schicht (IM1L1), die ein Polymer (L1) mit einer Glasübergangstemperatur unter 0 °C umfasst, und mindestens eine weitere Schicht (IM1L2), die ein Polymer (L2) mit einer Glasübergangstemperatur über 45°C umfasst, umfasst, wobei die Glasübergangstemperatur Tg wie in der Patentschrift beschrieben gemessen wird, und mindestens einem Füllstoff (F1),
b) Gewinnen der in a) erhaltenen Mischung,
c) Trocknen der in Schritt b) gewonnenen Mischung,
wobei das (Meth)acrylcopolymer (A1) bzw. die Mischung von zwei (Meth)acrylcopolymeren (A1a) und (Alb), der Schlagzähigkeitsmodifikator (IM1) und der Mineralfüllstoff in Schritt a) in Form einer Dispersion in wässriger Phase vorliegen.

14. Verfahren nach einem der Ansprüche 6 bis 13, **dadurch gekennzeichnet, dass** es sich bei der Zusammensetzung P1a oder P1b um ein homogenes Pulver ohne wesentliche Variation über die Zusammensetzung P1b, die ein (Meth)acrylcopolymer (Al) oder eine Mischung von zwei (Meth)acrylcopolymeren (A1a) und (A1b) mit mindestens einem Füllstoff (F) oder (F1) umfasst, und über die Zusammensetzung P1b, die ein (Meth)acrylcopolymer (Al) oder eine Mischung der zwei (Meth)acrylcopolymere (A1a), einen Schlagzähigkeitsmodifikator (IM1), bei dem es sich um ein Polymerteilchen mit einer Mehrschichtstruktur handelt, die mindestens eine Schicht (IM1L1), die ein Polymer (L1) mit einer Glasübergangstemperatur unter 0 °C umfasst, und mindestens eine weitere Schicht (IM1L2), die ein Polymer (L2) mit einer Glasübergangstemperatur über 45°C umfasst, umfasst, mit mindestens einem Füllstoff (F) oder (F1) umfasst, handelt, wobei eine Variation der Zusammensetzung P1a und P1b weniger als 30 %, bezogen auf die gesamte Zusammensetzung P1a und P1b, einer aus P1a bzw. P1b entnommenen Probe von 1 Gew.-% von P1a und P1b beträgt.

15. Gegenstand, umfassend eine Zusammensetzung nach einem der Ansprüche 1 bis 5 oder eine durch ein Verfahren nach einem der Ansprüche 6 bis 14 hergestellte Zusammensetzung.

16. Verwendung einer Zusammensetzung, umfassend ein (Meth)acrylcopolymer (A1) oder eine Mischung von zwei (Meth)acrylcopolymeren (A1a) und (Alb), einen Schlagzähigkeitsmodifikator (IM1), bei dem es sich um ein Polymerteilchen mit einer Mehrschichtstruktur handelt, die mindestens eine Schicht (IM1L1), die ein Polymer (L1) mit einer Glasübergangstemperatur unter 0 °C umfasst, und mindestens eine weitere Schicht (IM1L2), die ein Polymer (L2) mit einer Glasübergangstemperatur über 45°C umfasst, umfasst, wobei die Glasübergangstemperatur Tg wie in der Patentschrift beschrieben gemessen wird, und einen Füllstoff (F) oder (F1), die zur Verkürzung der Schmelzzeit einer Zusammensetzung, die ein halogenhaltiges thermoplastisches Polymer und einen Füllstoff (F) oder (F2) umfasst, verwendet werden kann, wobei die Glasübergangstemperatur Tg des (Meth)acrylcopolymers bzw. der Mischung von zwei (Meth)acrylcopolymeren (A1a) und (A1b) weniger als 105 °C beträgt, wobei die Glasübergangstemperatur Tg wie in der Patentschrift beschrieben gemessen wird, und wobei die Menge des Füllstoffs (F) bzw. (F1) und (F2) zusammen zwischen 5 phr und 120 phr, bezogen auf das halogenhaltige thermoplastische Polymer, liegt, und die Zusammensetzung zwischen 0,15 phr und 12 phr des Schlagzähigkeitsmodifikators (IM1) umfasst.

17. Verwendung einer Zusammensetzung, umfassend ein (Meth)acrylcopolymer (A1) oder eine Mischung von zwei (Meth)acrylcopolymeren (A1a) und (Alb), einen Schlagzähigkeitsmodifikator (IM1), bei dem es sich um ein Polymerteilchen mit einer Mehrschichtstruktur handelt, die mindestens eine Schicht (IM1L1), die ein Polymer (L1) mit einer Glasübergangstemperatur unter 0 °C umfasst, und mindestens eine weitere Schicht (IM1L2), die ein Polymer (L2) mit einer Glasübergangstemperatur über 45°C umfasst, umfasst, wobei die Glasübergangstemperatur Tg wie in der Patentschrift beschrieben gemessen wird, und einen Füllstoff F1 zur Verkürzung der Schmelzzeit einer Zusammensetzung, die ein halogenhaltiges Polymer und einen Füllstoff F2 umfasst, wobei die Glasübergangstemperatur Tg des (Meth)acrylcopolymers (A1) bzw. der Mischung von zwei (Meth)acrylcopolymeren (A1a) und (A1b) zwischen 60°C und 105 °C liegt, wobei die Glasübergangstemperatur Tg wie in der Patentschrift beschrieben gemessen wird, und wobei die Menge des Füllstoffs F1 und F2 zusammen zwischen 5 phr und 120 phr, bezogen auf das halogenhaltige thermoplastische Polymer, liegt, und die Zusammensetzung zwischen 0,15 phr und 12 phr des Schlagzähigkeitsmodifikators (IM1) umfasst.

18. Verwendung einer Zusammensetzung, umfassend ein (Meth)acrylcopolymer (A1) oder eine Mischung von zwei (Meth)acrylcopolymeren (A1a) und (A1b) und einen Füllstoff (F) oder (F1) zur Verkürzung der Schmelzzeit einer Zusammensetzung, die ein halogenhaltiges Polymer, einen Schlagzähigkeitsmodifikator (IM1), bei dem es sich um ein Polymerteilchen mit einer Mehrschichtstruktur handelt, die mindestens eine Schicht (IM1L1), die ein Polymer (L1) mit einer Glasübergangstemperatur unter 0 °C umfasst, und mindestens eine Schicht (IM1L2), die ein Polymer (L2) mit einer Glasübergangstemperatur über 45°C umfasst, umfasst, wobei die Glasübergangstemperatur Tg wie in der Patentschrift beschrieben gemessen wird, und einen Füllstoff (F) oder (F2) umfasst, wobei die Glasübergangstemperatur Tg des (Meth)acrylcopolymers bzw. der Mischung von zwei (Meth)acrylcopolymeren (A1a) und (A1b) zwischen 60°C und 105 °C liegt, wobei die Glasübergangstemperatur Tg wie in der Patentschrift beschrieben gemessen wird, und wobei die Menge des Füllstoffs (F) bzw. (F1) und (F2) zusammen zwischen 5 phr und 120 phr, bezogen auf das halogenhaltige thermoplastische Polymer, liegt, und die Zusammensetzung zwischen 0,15 phr und 12 phr des Schlagzähigkeitsmodifikators (IM1) umfasst.

19. Verwendung einer Zusammensetzung, umfassend ein (Meth)acrylcopolymer (A1) oder eine Mischung von zwei (Meth)acrylcopolymeren (A1a) und (Alb), einen Schlagzähigkeitsmodifikator (IM1), bei dem es sich um ein Polymerteilchen mit einer Mehrschichtstruktur handelt, die mindestens eine Schicht (IM1L1), die ein Polymer (L1) mit einer Glasübergangstemperatur unter 0 °C umfasst, und mindestens eine weitere Schicht (IM1L2), die ein Polymer (L2) mit einer Glasübergangstemperatur über 45°C umfasst, umfasst, wobei die Glasübergangstemperatur Tg wie in der Patentschrift beschrieben gemessen wird, und einen Füllstoff F1 zur Verkürzung der Schmelzzeit einer Zusammensetzung, die ein halogenhaltiges Polymer und einen Füllstoff F2 umfasst, wobei die Glasübergangstemperatur Tg des (Meth)acrylcopolymers (A1) bzw. der Mischung von zwei (Meth)acrylcopolymeren (A1a) und (A1b) zwischen 60°C und 105 °C liegt, wobei die Glasübergangstemperatur Tg wie in der Patentschrift beschrieben gemessen wird, und wobei die Menge des Füllstoffs F1 und F2 zusammen zwischen 5 phr und 120 phr, bezogen auf das halogenhaltige thermoplastische Polymer, liegt, und die Zusammensetzung zwischen 0,15 phr und 12 phr des Schlagzähigkeitsmodifikators (IM1) umfasst.

20. Verfahren zur Verkürzung der Schmelzzeit einer Zusammensetzung, die ein halogenhaltiges Polymer und einen Füllstoff (F) oder (F2) umfasst, durch Zugeben einer Zusammensetzung, umfassend ein (Meth)acrylcopolymer (A1) oder eine Mischung von zwei (Meth)acrylcopolymeren (A1a) und (Alb), einen Schlagzähigkeitsmodifikator (IM1), bei dem es sich um ein Polymerteilchen mit einer Mehrschichtstruktur handelt, die mindestens eine Schicht (IM1L1), die ein Polymer (L1) mit einer Glasübergangstemperatur unter 0 °C umfasst, und mindestens eine weitere Schicht (IM1L2), die ein Polymer (L2) mit einer Glasübergangstemperatur über 45°C umfasst, umfasst, wobei die Glasübergangstemperatur Tg wie in der Patentschrift beschrieben gemessen wird, und einen Füllstoff (F) oder (F1), wobei die Glasübergangstemperatur Tg des (Meth)acrylcopolymers bzw. der Mischung von zwei (Meth)acrylcopolymeren (A1a) und (A1b) zwischen 60°C und 105 °C liegt, wobei die Glasübergangstemperatur Tg wie in der Patentschrift beschrieben gemessen wird, und wobei die Menge des Füllstoffs (F) bzw. (F1) und (F2) zusammen zwischen 5 phr und 120 phr, bezogen auf das halogenhaltige thermoplastische Polymer, liegt, und die Zusammensetzung zwischen 0,15 phr und 12 phr des Schlagzähigkeitsmodifikators (IM1) umfasst.

21. Verfahren zur Verkürzung der Schmelzzeit einer Zusammensetzung P2a, die ein halogenhaltiges thermoplastisches Polymer und einen Füllstoff F2 umfasst, durch Zugeben einer Zusammensetzung P1a, umfassend ein (Meth)acrylcopolymer (A1) oder eine Mischung von zwei (Meth)acrylcopolymeren (A1a) und (Alb), einen Schlagzähigkeitsmodifikator (IM1), bei dem es sich um ein Polymerteilchen mit einer Mehrschichtstruktur handelt, die mindestens eine Schicht (IM1L1), die ein Polymer (L1) mit einer Glasübergangstemperatur unter 0 °C umfasst, und mindestens eine weitere Schicht (IM1L2), die ein Polymer (L2) mit einer Glasübergangstemperatur über 45°C umfasst, umfasst, wobei die Glasübergangstemperatur Tg wie in der Patentschrift beschrieben gemessen wird, und einen Füllstoff F1, wobei die Glasübergangstemperatur Tg des (Meth)acrylcopolymers (A1) bzw. der Mischung von zwei (Meth)acrylcopolymeren (A1a) und (A1b) zwischen 60°C und 105 °C liegt, wobei die Glasübergangstemperatur Tg wie in der Patentschrift beschrieben gemessen wird, und wobei die Menge des Füllstoffs F1 und F2 zusammen zwischen 5 phr und 120 phr, bezogen auf das halogenhaltige thermoplastische Polymer, liegt, und die Zusammensetzung zwischen 0,15 phr und 12 phr des Schlagzähigkeitsmodifikators (IM1) umfasst.

22. Verfahren zur Verkürzung der Schmelzzeit einer Zusammensetzung, die ein halogenhaltiges Polymer, einen Schlagzähigkeitsmodifikator (IM1), bei dem es sich um ein Polymerteilchen mit einer Mehrschichtstruktur handelt, die mindestens eine Schicht (IM1L1), die ein Polymer (L1) mit einer Glasübergangstemperatur unter 0 °C umfasst, und mindestens eine weitere Schicht (IM1L2), die ein Polymer (L2) mit einer Glasübergangstemperatur über 45°C umfasst, umfasst, wobei die Glasübergangstemperatur Tg wie in der Patentschrift beschrieben gemessen wird, und einen Füllstoff (F) oder (F2) umfasst, durch Zugeben einer Zusammensetzung P1b, umfassend ein (Meth)acrylcopolymer (A1) oder eine Mischung von zwei (Meth)acrylcopolymeren (A1a) und (A1b) und einen Füllstoff (F) oder (F1), wobei die Glasübergangstemperatur Tg des (Meth)acrylcopolymers bzw. der Mischung von zwei (Meth)acrylcopolymeren (A1a) und (A1b) zwischen 60°C und 105 °C liegt, wobei die Glasübergangstemperatur Tg wie in der Patentschrift beschrieben gemessen wird, und wobei die Menge des Füllstoffs (F) bzw. (F1) und F2 zusammen zwischen 5 phr und 120 phr, bezogen auf das halogenhaltige thermoplastische Polymer, liegt, und die Zusammensetzung zwischen 0,15 phr und 12 phr des Schlagzähigkeitsmodifikators (IM1) umfasst.

23. Verfahren zur Verkürzung der Schmelzzeit einer Zusammensetzung P2a, die ein halogenhaltiges Polymer und einen Füllstoff F2 umfasst, durch Zugeben einer Zusammensetzung P1a, umfassend ein (Meth)acrylcopolymer (A1) oder eine Mischung von zwei (Meth)acrylcopolymeren (A1a) und (Alb), einen Schlagzähigkeitsmodifikator (IM1), bei dem es sich um ein Polymerteilchen mit einer Mehrschichtstruktur handelt, die mindestens eine Schicht (IM1L1), die ein Polymer (L1) mit einer Glasübergangstemperatur unter 0 °C umfasst, und mindestens eine weitere Schicht (IM1L2), die ein Polymer (L2) mit einer Glasübergangstemperatur über 45°C umfasst, umfasst, wobei die Glasübergangstemperatur Tg wie in der Patentschrift beschrieben gemessen wird, und einen Füllstoff F1, wobei die Glasübergangstemperatur Tg des (Meth)acrylcopolymers (A1) bzw. der Mischung von zwei (Meth)acrylcopolymeren (A1a) und (A1b) zwischen 60°C und 105 °C liegt, wobei die Glasübergangstemperatur Tg wie in der Patentschrift beschrieben gemessen wird, und wobei die Menge des Füllstoffs F1 und F2 zusammen zwischen 5 phr und 120 phr, bezogen auf das halogenhaltige thermoplastische Polymer, liegt, und die Zusammensetzung zwischen 0,15 phr und 12 phr des Schlagzähigkeitsmodifikators (IM1) umfasst.

## Revendications

1. Composition comprenant :
a) un copolymère (méth)acrylique (A1) ou un mélange de deux copolymères (méth)acryliques (A1a) et (A1b),
b) une charge (F) ou un mélange de deux charges (F1) et (F2)
c) un polymère thermoplastique contenant halogène et
d) un modificateur d'impact (IM1) qui est une particule de polymère ayant une structure multicouche, comprenant au moins une couche (IM1L1) comprenant un polymère (L1) ayant une température de transition vitreuse inférieure à 0 °C et au moins une autre couche (IM1L2) comprenant un polymère (L2) ayant une température de transition vitreuse supérieure à 45 °C, ladite température de transition vitreuse étant mesurée comme décrit dans la description ;
**caractérisée en ce que** la température de transition vitreuse Tg du copolymère (méth)acrylique (A1) ou du mélange de deux copolymères (méth)acryliques (A1a) et (A1b) est comprise entre 60 °C et 105 °C, ladite température de transition vitreuse Tg étant mesurée comme décrit dans la description, et **en ce que** la quantité de la charge F ou du mélange de deux charges (F1) et (F2) est comprise entre 5 phr et 120 phr par rapport au polymère thermoplastique contenant halogène et
**caractérisée en ce que** la composition comprend entre 0,15 phr et 12 phr du modificateur d'impact (IM1) et **en ce qu'**une partie de la charge (F) ou une partie du mélange de deux charges (F1) et (F2) est ajoutée à la composition avec le copolymère (méth)acrylique (A1) ou le mélange de deux copolymères (méth)acryliques (A1a) et (A1b) et l'autre partie de la charge (F) ou l'autre partie du mélange de deux charges (F1) et (F2) est ajoutée à la composition soit séparément, soit déjà avec un polymère thermoplastique contenant halogène.

2. Composition selon la revendication 1, le copolymère (méth) acrylique (A1) ou le mélange de deux copolymères (méth)acryliques (A1a) et (A1b) étant choisi parmi un copolymère comprenant au moins 50 % en poids de méthacrylate de méthyle.

3. Composition selon l'une quelconque des revendications 1 à 2, comprenant entre 0,01 phr et 20 phr du copolymère (méth) acrylique (A1) ou du mélange de deux copolymères (méth)acryliques (A1a) et (A1b) par rapport au polymère thermoplastique contenant halogène.

4. Composition selon l'une quelconque des revendications 1 à 3, au moins une partie de la charge (F) ou du mélange de deux charges (F1) et (F2) étant une charge minérale choisie parmi le carbonate de calcium, une argile calcinée, une silice (pyrogénée ou précipitée), une argile, une montmorillonite (nano-argile), une zéolithe ou une perlite.

5. Composition selon l'une quelconque des revendications 1 à 4, la particule de polymère ayant une structure multicouche étant un polymère de type noyau/enveloppe.

6. Procédé pour la préparation de la composition selon les revendications 1 à 5, ledit procédé comprenant l'étape de mélange d'une composition P1a avec un polymère contenant halogène et une charge (F) ou (F2)
**caractérisé en ce que** la composition P1a comprend un copolymère (méth)acrylique (A1) ou un mélange de deux copolymères (méth)acryliques (A1a) et (A1b), un modificateur d'impact (IM1) qui est une particule de polymère ayant une structure multicouche, comprenant au moins une couche (IM1L1) comprenant un polymère (L1) ayant une température de transition vitreuse inférieure à 0 °C et au moins une autre couche (IM1L2) comprenant un polymère (L2) ayant une température de transition vitreuse supérieure à 45 °C, ladite température de transition vitreuse Tg étant mesurée comme décrit dans la description, et une charge (F) ou (F1) et
la température de transition vitreuse Tg du copolymère (méth)acrylique étant comprise entre 60 °C et 105 °C, ladite température de transition vitreuse Tg étant mesurée comme décrit dans la description, et la quantité de la charge (F) ou (F1) et (F2) ensemble étant comprise entre 5 phr et 120 phr par rapport au polymère thermoplastique contenant halogène et la composition comprenant entre 0,15 phr et 12 phr du modificateur d'impact (IM1) .

7. Procédé pour la préparation de la composition selon les revendications 1 à 5, ledit procédé comprenant l'étape de mélange d'une composition P1b avec un polymère contenant halogène, un modificateur d'impact (IM1) qui est une particule de polymère ayant une structure multicouche, comprenant au moins une couche (IM1L1) comprenant un polymère (L1) ayant une température de transition vitreuse inférieure à 0 °C et au moins une autre couche (IM1L2) comprenant un polymère (L2) ayant une température de transition vitreuse supérieure à 45 °C, ladite température de transition vitreuse Tg étant mesurée comme décrit dans la description, et une charge (F) ou (F2)
**caractérisé en ce que** la composition P1b comprend un copolymère (méth)acrylique (A1) ou un mélange de deux copolymères (méth)acryliques (A1a) et (A1b) et une charge (F) ou (F1) et
la température de transition vitreuse Tg du copolymère (méth)acrylique étant comprise entre 60 °C et 105 °C, ladite température de transition vitreuse Tg étant mesurée comme décrit dans la description, et la quantité de la charge (F) ou (F1) et (F2) ensemble étant comprise entre 5 phr et 120 phr par rapport au polymère thermoplastique contenant halogène et la composition comprenant entre 0,15 phr et 12 phr du modificateur d'impact (IM1) .

8. Procédé pour la préparation de la composition selon les revendications 1 à 5, ledit procédé comprenant l'étape de mélange de deux compositions P1a et P2a, **caractérisé en ce que** la composition P1a comprend un copolymère (méth)acrylique (A1) ou un mélange de deux copolymères (méth)acryliques (A1a) et (A1b), un modificateur d'impact (IM1) qui est une particule de polymère ayant une structure multicouche, comprenant au moins une couche (IM1L1) comprenant un polymère (L1) ayant une température de transition vitreuse inférieure à 0 °C et au moins une autre couche (IM1L2) comprenant un polymère (L2) ayant une température de transition vitreuse supérieure à 45 °C, ladite température de transition vitreuse Tg étant mesurée comme décrit dans la description, et une charge F ou F1 et la composition P2a comprend un polymère contenant halogène et une charge F ou F2
**caractérisé en ce que** la température de transition vitreuse Tg du copolymère (méth)acrylique (A1) ou du mélange de deux copolymères (méth)acryliques (A1a) et (A1b) est comprise entre 60 °C et 105 °C, ladite température de transition vitreuse Tg étant mesurée comme décrit dans la description, et **en ce que** la quantité de la charge F ou F1 et F2 ensemble est comprise entre 5 phr et 120 phr par rapport au polymère thermoplastique contenant halogène et la composition comprend entre 0,15 phr et 12 phr du modificateur d'impact (IM1).

9. Procédé pour la préparation de la composition selon les revendications 1 à 5, ledit procédé comprenant l'étape de mélange de deux compositions P1b et P2b, **caractérisé en ce que** la composition P1b comprend un copolymère (méth)acrylique (A1) ou un mélange de deux copolymères (méth)acryliques (A1a) et (A1b) et une charge F ou F1 et
la composition P2b comprend un polymère contenant halogène, un modificateur d'impact (IM1) qui est une particule de polymère ayant une structure multicouche, comprenant au moins une couche (IM1L1) comprenant un polymère (L1) ayant une température de transition vitreuse inférieure à 0 °C et au moins une autre couche (IM1L2) comprenant un polymère (L2) ayant une température de transition vitreuse supérieure à 45 °C, ladite température de transition vitreuse Tg étant mesurée comme décrit dans la description, et une charge F ou F2
**caractérisé en ce que** la température de transition vitreuse Tg du copolymère (méth)acrylique (A1) ou du mélange de deux copolymères (méth)acryliques (A1a) et (A1b) est comprise entre 60 °C et 105 °C, ladite température de transition vitreuse Tg étant mesurée comme décrit dans la description, et **en ce que** la quantité de la charge F ou F1 et F2 ensemble est comprise entre 5 phr et 120 phr par rapport au polymère thermoplastique contenant halogène et la composition comprend entre 0,15 phr et 12 phr du modificateur d'impact (IM1).

10. Procédé selon la revendication 7 ou 9, **caractérisé en ce que** la composition P1b est obtenue par un procédé de fabrication comprenant l'étape de
a) mélange d'au moins un copolymère (méth)acrylique (A1) ou d'un mélange de deux copolymères (méth)acryliques (A1a) et (A1b) avec au moins une charge (F) ou (F1),
le copolymère (méth)acrylique (A1) ou le mélange de deux copolymères (méth)acryliques (A1a) et (A1b) et la charge (F) ou (F1) dans l'étape a) étant sous forme d'une dispersion dans une phase aqueuse.

11. Procédé selon la revendication 7 ou 9, **caractérisé en ce que** la composition P1b est obtenue par un procédé de fabrication comprenant l'étape de
a) mélange d'au moins un copolymère (méth)acrylique (A1) ou d'un mélange de deux copolymères (méth)acryliques (A1a) et (A1b) avec au moins une charge (F) ou (F1)
b) récupération du mélange obtenu en a),
c) séchage du mélange récupéré de l'étape b),
le copolymère (méth)acrylique (A1) ou le mélange de deux copolymères (méth)acryliques (A1a) et (A1b) et la charge minérale dans l'étape a) étant sous forme d'une dispersion dans une phase aqueuse.

12. Procédé selon la revendication 6 ou 8, **caractérisé en ce que** la composition P1a est obtenue par un procédé de fabrication comprenant l'étape de
a) mélange d'au moins un copolymère (méth)acrylique (A1) ou d'un mélange de deux copolymères (méth)acryliques (A1a) et (A1b) avec un modificateur d'impact (IM1) qui est une particule de polymère ayant une structure multicouche, comprenant au moins une couche (IM1L1) comprenant un polymère (L1) ayant une température de transition vitreuse inférieure à 0 °C et au moins une autre couche (IM1L2) comprenant un polymère (L2) ayant une température de transition vitreuse supérieure à 45 °C, ladite température de transition vitreuse Tg étant mesurée comme décrit dans la description et avec au moins une charge (F1),
le copolymère (méth)acrylique (A1) ou le mélange de deux copolymères (méth)acryliques (A1a) et (A1b), le modificateur d'impact (IM1) et la charge minérale dans l'étape a) étant sous forme d'une dispersion dans une phase aqueuse.

13. Procédé selon la revendication 6 ou 8, **caractérisé en ce que** la composition P1a est obtenue par un procédé de fabrication comprenant l'étape de
a) mélange d'au moins un copolymère (méth)acrylique (A1) ou d'un mélange de deux copolymères (méth)acryliques (A1a) et (A1b) avec un modificateur d'impact (IM1) qui est une particule de polymère ayant une structure multicouche, comprenant au moins une couche (IM1L1) comprenant un polymère (L1) ayant une température de transition vitreuse inférieure à 0 °C et au moins une autre couche (IM1L2) comprenant un polymère (L2) ayant une température de transition vitreuse supérieure à 45 °C, ladite température de transition vitreuse Tg étant mesurée comme décrit dans la description et avec au moins une charge (F1),
b) récupération du mélange obtenu en a),
c) séchage du mélange récupéré de l'étape b)
le copolymère (méth)acrylique (A1) ou le mélange de deux copolymères (méth)acryliques (A1a) et (A1b), le modificateur d'impact (IM1) et la charge minérale dans l'étape a) étant sous forme d'une dispersion dans une phase aqueuse.

14. Procédé selon l'une quelconque des revendications 6 à 13, **caractérisé en ce que** la composition P1a ou P1b est une poudre homogène n'ayant pas de variation importante dans l'ensemble de la composition P1b comprenant un copolymère (méth)acrylique (A1) ou un mélange de deux copolymères (méth)acryliques (A1a) et (A1b) avec au moins une charge (F) ou (F1) ; et dans l'ensemble de la composition P1b comprenant un copolymère (méth)acrylique (A1) ou le mélange de deux copolymères (méth)acryliques (A1a), un modificateur d'impact (IM1) qui est une particule de polymère ayant une structure multicouche, comprenant au moins une couche (IM1L1) comprenant un polymère (L1) ayant une température de transition vitreuse inférieure à 0 °C et au moins une autre couche (IM1L2) comprenant un polymère (L2) ayant une température de transition vitreuse supérieure à 45 °C, ladite température de transition vitreuse Tg étant mesurée comme décrit dans la description, avec au moins une charge (F) ou (F1) ; avec une variation de la composition P1a et P1b qui est inférieure à 30 % par rapport à la composition globale P1a et P1b d'un échantillon de 1 % en poids de P1a et P1b pris de P1a et P1b respectivement.

15. Article comprenant une composition selon l'une quelconque des revendications 1 à 5 ou une composition préparée par un procédé selon l'une quelconque des revendications 6 à 14.

16. Utilisation d'une composition comprenant un copolymère (méth)acrylique (A1) ou un mélange de deux copolymères (méth)acryliques (A1a) et (A1b), un modificateur d'impact (IM1) qui est une particule de polymère ayant une structure multicouche, comprenant au moins une couche (IM1L1) comprenant un polymère (L1) ayant une température de transition vitreuse inférieure à 0 °C et au moins une autre couche (IM1L2) comprenant un polymère (L2) ayant une température de transition vitreuse supérieure à 45 °C, ladite température de transition vitreuse Tg étant mesurée comme décrit dans la description, et une charge (F) ou (F1), qui peut être utilisée pour diminuer le temps de fusion d'une composition comprenant un polymère thermoplastique contenant halogène et une charge (F) ou (F2), la température de transition vitreuse Tg du copolymère (méth)acrylique ou du mélange de deux copolymères (méth)acryliques (A1a) et (A1b) étant inférieure à 105 °C, ladite température de transition vitreuse Tg étant mesurée comme décrit dans la description, et la quantité de la charge (F) ou (F1) et (F2) ensemble étant comprise entre 5 phr et 120 phr par rapport au polymère thermoplastique contenant halogène et la composition comprenant entre 0,15 phr et 12 phr du modificateur d'impact (IM1).

17. Utilisation d'une composition comprenant un copolymère (méth)acrylique (A1) ou un mélange de deux copolymères (méth)acryliques (A1a) et (A1b), un modificateur d'impact (IM1) qui est une particule de polymère ayant une structure multicouche, comprenant au moins une couche (IM1L1) comprenant un polymère (L1) ayant une température de transition vitreuse inférieure à 0 °C et au moins une autre couche (IM1L2) comprenant un polymère (L2) ayant une température de transition vitreuse supérieure à 45 °C, ladite température de transition vitreuse Tg étant mesurée comme décrit dans la description, et une charge F1 pour diminuer le temps de fusion d'une composition comprenant un polymère contenant halogène et une charge F2, la température de transition vitreuse Tg du copolymère (méth) acrylique (A1) ou du mélange de deux copolymères (méth)acryliques (A1a) et (A1b) étant comprise entre 60 °C et 105 °C, ladite température de transition vitreuse Tg étant mesurée comme décrit dans la description, et la quantité de la charge (F1) et (F2) ensemble étant comprise entre 5 phr et 120 phr par rapport au polymère thermoplastique contenant halogène et la composition comprenant entre 0,15 phr et 12 phr du modificateur d'impact (IM1) .

18. Utilisation d'une composition comprenant un copolymère (méth)acrylique (A1) ou un mélange de deux copolymères (méth)acryliques (A1a) et (A1b) et une charge (F) ou (F1) pour diminuer le temps de fusion d'une composition comprenant un polymère contenant halogène, un modificateur d'impact (IM1) qui est une particule de polymère ayant une structure multicouche, comprenant au moins une couche (IM1L1) comprenant un polymère (L1) ayant une température de transition vitreuse inférieure à 0 °C et au moins une autre couche (IM1L2) comprenant un polymère (L2) ayant une température de transition vitreuse supérieure à 45 °C, ladite température de transition vitreuse Tg étant mesurée comme décrit dans la description, et une charge (F) ou (F2), la température de transition vitreuse Tg du copolymère (méth)acrylique ou du mélange de deux copolymères (méth)acryliques (A1a) et (A1b) étant comprise entre 60 °C et 105 °C, ladite température de transition vitreuse Tg étant mesurée comme décrit dans la description, et la quantité de la charge (F) ou (F1) et (F2) ensemble étant comprise entre 5 phr et 120 phr par rapport au polymère thermoplastique contenant halogène et la composition comprenant entre 0,15 phr et 12 phr du modificateur d'impact (IM1) .

19. Utilisation d'une composition comprenant un copolymère (méth)acrylique (A1) ou un mélange de deux copolymères (méth)acryliques (A1a) et (A1b), un modificateur d'impact (IM1) qui est une particule de polymère ayant une structure multicouche, comprenant au moins une couche (IM1L1) comprenant un polymère (L1) ayant une température de transition vitreuse inférieure à 0 °C et au moins une autre couche (IM1L2) comprenant un polymère (L2) ayant une température de transition vitreuse supérieure à 45 °C, ladite température de transition vitreuse Tg étant mesurée comme décrit dans la description, et une charge (F1) pour diminuer le temps de fusion d'une composition comprenant un polymère contenant halogène, et une charge (F2), la température de transition vitreuse Tg du copolymère (méth) acrylique (A1) ou du mélange de deux copolymères (méth)acryliques (A1a) et (A1b) étant comprise entre 60 °C et 105 °C, ladite température de transition vitreuse Tg étant mesurée comme décrit dans la description, et la quantité de la charge (F1) et (F2) ensemble étant comprise entre 5 phr et 120 phr par rapport au polymère thermoplastique contenant halogène et la composition comprenant entre 0,15 phr et 12 phr du modificateur d'impact (IM1) .

20. Procédé pour diminuer le temps de fusion d'une composition comprenant un polymère contenant halogène et une charge (F) ou (F2) par ajout d'une composition comprenant un copolymère (méth) acrylique (A1) ou un mélange de deux copolymères (méth)acryliques (A1a) et (A1b), un modificateur d'impact (IM1) qui est une particule de polymère ayant une structure multicouche comprenant au moins une couche (IM1L1) comprenant un polymère (L1) ayant une température de transition vitreuse inférieure à 0 °C et au moins une autre couche (IM1L2) comprenant un polymère (L2) ayant une température de transition vitreuse supérieure à 45 °C, ladite température de transition vitreuse Tg étant mesurée comme décrit dans la description, et une charge (F) ou (F1), la température de transition vitreuse Tg du copolymère (méth)acrylique (A1) ou du mélange de deux copolymères (méth)acryliques (A1a) et (A1b) étant comprise entre 60 °C et 105 °C, ladite température de transition vitreuse Tg étant mesurée comme décrit dans la description, et la quantité de la charge (F) ou (F1) et (F2) ensemble étant comprise entre 5 phr et 120 phr par rapport au polymère thermoplastique contenant halogène et la composition comprenant entre 0,15 phr et 12 phr du modificateur d'impact (IM1).

21. Procédé pour diminuer le temps de fusion d'une composition P2a comprenant un polymère thermoplastique contenant halogène et une charge (F2) par ajout d'une composition P1a comprenant un copolymère (méth)acrylique (A1) ou un mélange de deux copolymères (méth)acryliques (A1a) et (A1b), un modificateur d'impact (IM1) qui est une particule de polymère ayant une structure multicouche comprenant au moins une couche (IM1L1) comprenant un polymère (L1) ayant une température de transition vitreuse inférieure à 0 °C et au moins une autre couche (IM1L2) comprenant un polymère (L2) ayant une température de transition vitreuse supérieure à 45 °C, ladite température de transition vitreuse Tg étant mesurée comme décrit dans la description, et une charge (F1), la température de transition vitreuse Tg du copolymère (méth)acrylique (A1) ou du mélange de deux copolymères (méth)acryliques (A1a) et (A1b) étant comprise entre 60 °C et 105 °C, ladite température de transition vitreuse Tg étant mesurée comme décrit dans la description, et la quantité de la charge (F1) et (F2) ensemble étant comprise entre 5 phr et 120 phr par rapport au polymère thermoplastique contenant halogène et la composition comprenant entre 0,15 phr et 12 phr du modificateur d'impact (IM1).

22. Procédé pour diminuer le temps de fusion d'une composition comprenant un polymère contenant halogène, un modificateur d'impact (IM1) qui est une particule de polymère ayant une structure multicouche comprenant au moins une couche (IM1L1) comprenant un polymère (L1) ayant une température de transition vitreuse inférieure à 0 °C et au moins une autre couche (IM1L2) comprenant un polymère (L2) ayant une température de transition vitreuse supérieure à 45 °C, ladite température de transition vitreuse Tg étant mesurée comme décrit dans la description, et une charge (F) ou (F2) par ajout d'une composition P1b comprenant un copolymère (méth) acrylique (A1) ou un mélange de deux copolymères (méth)acryliques (A1a) et (A1b) et une charge (F) ou (F1), la température de transition vitreuse Tg du copolymère (méth)acrylique (A1) ou du mélange de deux copolymères (méth)acryliques (A1a) et (A1b) étant comprise entre 60 °C et 105 °C, ladite température de transition vitreuse Tg étant mesurée comme décrit dans la description, et la quantité de la charge (F) ou (F1) et (F2) ensemble étant comprise entre 5 phr et 120 phr par rapport au polymère thermoplastique contenant halogène et la composition comprenant entre 0,15 phr et 12 phr du modificateur d'impact (IM1).

23. Procédé pour diminuer le temps de fusion d'une composition P2a comprenant un polymère contenant halogène et une charge (F2) par ajout d'une composition P1a comprenant un copolymère (méth) acrylique (A1) ou un mélange de deux copolymères (méth)acryliques (A1a) et (A1b), un modificateur d'impact (IM1) qui est une particule de polymère ayant une structure multicouche comprenant au moins une couche (IM1L1) comprenant un polymère (L1) ayant une température de transition vitreuse inférieure à 0 °C et au moins une autre couche (IM1L2) comprenant un polymère (L2) ayant une température de transition vitreuse supérieure à 45 °C, ladite température de transition vitreuse Tg étant mesurée comme décrit dans la description, et une charge (F1), la température de transition vitreuse Tg du copolymère (méth)acrylique (A1) ou du mélange de deux copolymères (méth)acryliques (A1a) et (A1b) étant comprise entre 60 °C et 105 °C, ladite température de transition vitreuse Tg étant mesurée comme décrit dans la description, et la quantité de la charge (F1) et (F2) ensemble étant comprise entre 5 phr et 120 phr par rapport au polymère thermoplastique contenant halogène et la composition comprenant entre 0,15 phr et 12 phr du modificateur d'impact (IM1).
